Europäisches Patentamt

European Patent Office     (11) Veröffentlichungsnummer: **0 089 058**

Office européen des brevets     **B1**

(19)

(12) **EUROPÄISCHE PATENTSCHRIFT**

(45) Veröffentlichungstag der Patentschrift:
04.11.87

(21) Anmeldenummer: **83102532.5**

(22) Anmeldetag: **15.03.83**

(51) Int. Cl.⁴: **G 05 B 11/28,** G 05 B 11/56,
F 15 B 21/08 //
G05D7/06

(54) **Verfahren und Anordnung zur Regelung einer Regelgrösse sowie Anwendung des Verfahrens.**

(30) Priorität: **16.03.82 DE 3209494**
**16.03.82 DE 3209576**

(43) Veröffentlichungstag der Anmeldung:
**21.09.83 Patentblatt 83/38**

(45) Bekanntmachung des Hinweises auf die Patenterteilung:
**04.11.87 Patentblatt 87/45**

(84) Benannte Vertragsstaaten:
**CH DE FR GB IT LI NL SE**

(56) Entgegenhaltungen:
**EP-A-0 055 351**
**FR-A-1 507 379**
**FR-A-2 083 849**
**FR-A-2 197 479**
**US-A-3 477 346**

(73) Patentinhaber: **Gebrüder Bühler AG, CH- 9240 Uzwil
(CH)**

(72) Erfinder: **Oetiker, Hans, Salisstraat 4, CH- 9000 St.
Gallen (CH)**
Erfinder: **Kummer, Emanuel, Bachstraat 40, CH-
9202 Gossau (CH)**
Erfinder: **Reznicek, Ivan, Grand Champ 255, CH-
1751 Neyruz (CH)**

(74) Vertreter: **EGLI- EUROPEAN PATENT ATTORNEYS,
Widenmayerstrasse 5, D-8000 München 22 (DE)**

EP 0 089 058 B1

## Beschreibung

Die Erfindung bezieht sicht auf ein Regelverfahren gemäß dem Oberbegriff des Patentanspruches 1.

Die Erfindung bezieht sich darüber hinaus auf eine Anordnung zur Regelung einer Regelgröße mit einem Sollwert-Geber, einem Istwert-Fühler, einer einen Diskriminator aufweisenden Komparator/Regler-Einheit und einem den vorstehenden Elementen nachgeschalteten Stellglied (Stellantrieb und Stellorgan), dessen Stellantrieb als fluidischer Druckantrieb ausgelegt ist.

Bei einer aus der DE-A-22 23 476 bekannten Anordnung weist das vom Reglerausgang angesteuerte Stellglied, d.h. der Stellantrieb und das Stellorgan, eine pneumatisch betätigte Membrankammer (Stellantrieb) und ein von der Membrankammer betätigtes Abflußventil (Stellorgan) auf. Die bekannte Regelanordnung ist als Dreipunktregler ausgebildet. Deren Komparator/Regler-Einheit unterscheidet demnach nur zwischen drei Zuständen von Regelabweichungen, d.h. Werten der Differenz zwischen Istwert und Sollwert, nämlich: i) die Regelabweichung ist größer als Null; ii) die Regelabweichung ist kleiner als Null; und iii) die Regelabweichung ist gleich Null. Da die bekannte Regler/Komparator-Einheit in der Lage ist, zwischen den drei vorgenannten Zuständen von Regelabweichungen zu unterscheiden, könnte die für diese Unterschiedung vorgesehene Einheit auch als Diskriminator betrachtet werden. Im übrigen befaßt sich die aus der vorgenannten deutschen Auslegeschrift bekannte Lehre mit dem Problem der Vereinfachung einer den Schaltabstand des Reglers beeinflussenden Rückführung. Nach der bekannten Lehre wird dieses Problem dadurch gelöst, daß das Zeitverhalten der Rückführung mit Hilfe von Drosseln einstellbar ist. Die aus der vorgenannten deutschen Auslegeschrift bekannte Lehre befaßt sich nicht mit dem Problem einer möglichst genauen Regelung, insbesondere nicht mit dem Problem der exakten Regelung des Durchsatzes von schüttfähigem und flüssigem Gut durch eine Gutzuführung in einer Getreidemühlenanlage. Dieses, in der vorgenannten Druckschrift nicht behandelte Problem ist aber ein zentrales Problem jeder Regelung. Ihm kommt insbesondere große Bedeutung bei der Dosierung von kontinuierlich fließenden Stoffströmen, beispielsweise Wasser oder Getreide in der Getreidemüllerei zu. Denn die Regelung der Durchsatzleistung von schüttfähigen und flüssigen Stoffen ist in der Getreidemüllerei nach wie vor eine der kritischen Schnittstellen zwischen den altbekannten mechanischen Anlageteilen sowie den modernen Steuermitteln.

Ein Verfahren und eine Anordnung der eingangs genannten Art sind aus der FR-A-2 083 849 bekannt. Bei dem bekannten Verfahren werden (auch) die im Feinbereich liegenden Regelabweichungen nach Größe und Richtung erfaßt und das so gewonnene Fehlersignal einer elektronischen Auswerteeinrichtung zugeführt. Die elektronische Auswerteeinrichtung erzeugt hieraus ein binäres, impulslängenmoduliertes Signal, das zur Ansteuerung eines Feinventiles verwendet wird. Für den Fall, daß das Fehlersignal verschwindet, d.h. der gemessene Istwert dem vorgegebenen Sollwert entspricht, ist das binäre impulslängenmodulierte Signal so beschaffen, daß seine beiden Zustände im Durchschnitt über die gleiche Zeitdauer vorliegen. Eine solche Schaltung erfordert ein präzises Erfassen der Regelabweichung auch in dem (kleinen) Feinbereich. Darüber hinaus muß durch eine aufwendige Schaltung die erfaßte Regelabweichung in ein impulslängenmoduliertes Signal umgewandelt werden. Die hierzu erforderliche Schaltung muß geeicht werden, d.h. es muß dafür gesorgt werden, daß zu jeder Regelabweichung im Feinbereich die zugehörige und die richtige Impulslängenmodulation gewählt wird.

Ausgehend von diesem Stand der Technik liegt der Erfindung die Aufgabe zugrunde, ein Regelverfahren zu schaffen, das sich durch zuverlässige Funktion auszeichnet, und das mit einer einfach aufgebauten Regelanordnung durchgeführt werden kann.

Bei dem eingangs genannten Regelverfahren ist diese Aufgabe dadurch gelöst, daß die Mikrodruckschwankungen dadurch erzeugt werden, daß die effektive Fluidfeinströmung jedesmal dann umgekehrt wird, wenn die Regelabweichung innerhalb des Feinbereichs liegende Schwellwerte erreicht.

Für die Regelanordnung wird diese Aufgabe dadurch gelöst, daß der Diskriminator derart ausgelegt ist, daß er ein erstes Diskriminations-Signal abgibt, wenn die vom Komparatorabschnitt der Komparator/Regler-Einheit gemessenen Regelabweichungen zwischen zwei (einem ersten und einem zweiten) Schwellenwerten innerhalb eines vorgegebenen, um Null gelegenen ersten Wertebereiches (Bereich kleiner Regelabweichungen) liegen, und ein Steuereingang des fluidischen Druckantriebes mit dem zur Abgabe des ersten Diskriminations-Signals vorgesehenen Diskriminatorausgang verbunden ist, und dieser Steuereingang zur Beaufschlagung des Druckantriebes mit Mikro-Druckschwankungen (rasche Druckschwankungen mit geringen Spitzenwerten) bei Ansteuerung durch das erste Diskriminationssignal ausgelegt ist.

Die im Bereich kleiner Regelabweichungen vorgenommene Beaufschlagung des fluidischen Druckantriebes mit den Mikro-Druckschwankungen führt zu laufenden Druckänderungen des Fluiddruckes im Druckantrieb. Da die Initiierung der Mikro-Druckschwankungen, insbesondere die Umkehrpunkte der Druckschwankungen, unter anderem von den im Bereich kleiner Regelabweichungen liegenden vorgegebenen ersten und zweiten Schwellenwerten abhängt bzw. abhängen, insoweit also istwertabhängig ist bzw. sind, können den Mikro-Druckschwankungen weder eine Frequenz noch eine Amplitude im engeren Sinne, d.h. weder eine konstante Anzahl von Umkehrpunkten pro Zeiteinheit noch konstante Spitzenwerte des Druckes, also insoweit die für Schwingungen hierfür charakteristischen konstanten Parameter, zugeordnet werden. Deshalb werden anstelle der Ausdrücke "Druckschwingungen", "Frequenz" und "Amplitude" die Ausdrücke "Druckschwankungen", "mittlere Schwankungshäufigkeit" und "Spitzenwert" gewählt.

Anmelderseitig durchgeführte Versuche haben ergeben, daß aufgrund der für Regelkreise an sich atypischen Einführung von Mikro-Druckschwankungen in den fluidischen Druckantrieb eine unerwartet hohe Regelgenauigkeit nebst guter Überschaubarkeit und Führung des gesamten Regelungsprozesses erreicht werden konnte - und dies selbst bei den äußerst rauhen Regelbedingungen in einer Getreidemühlenanlage. An sich sollte man erwarten, daß durch die Initiierung der Mikro-Druckschwankungen im fluidischen Druckantrieb die von fluidischen Systemen zur kontinuierlichen Regelung her bekannten und gefürchteten Fluidsystem-Aufschaukelung verstärkt auftreten würden. Das Gegenteil war der Fall.

Aus der deutschen Offenlegungsschrift DE-30 37 335 A 1 vom 14. Mai 1981 (Aktiebolaget Bofors) ist es an sich bekannt, zur Erhöhung der Linearität und der Verstärkung kleiner Signale in einem Servosystem, insbesondere für ein Zielverfolgungsgerät, ein sogenanntes "Zittersignal" dem Steuersignal des Servosystems zu überlagern und die Frequenz des Zittersignals so zu wählen, daß sie ungefähr gleich oder etwa oberhalb der oberen Frequenzgrenze des Servosystems liegt. Gemäß dieser bekannten Lehre werden dadurch leichte Ungenauigkeiten, wie beispielsweise Nichtlinearitäten, Spiel, Reibungen, Hysteresephänomene etc. des Gesamtservosystems vermieden. Alternativ kann nach der angegebenen Lehre dieses Zittersignal auch dem Sollwertsignal aufgeprägt werden. In jedem Fall hat dieses Zittersignal eine fest vorgegebene Frequenz und eine fest vorgegebene amplitude, ist also eine echte Schwingung, die insbesondere völlig unabhängig vom Istwertsignal ist. Beispielsweise wird dieses Zittersignal von einem (elektronischen) Zitteroszillator erzeugt, der auf eine Frequenz von 8 Hz fixiert ist. Darüber hinaus spricht die aus der vorgenannten DE-30 37 335 A 1 bekannte Lehre auch nicht den Problemkreis pneumatischer bzw. fluidischer Steuerungen, insbesondere keinen fluidischen Stellantrieb an. Wie bereits erwähnt, sind aber bekanntlich fluidische Regelsysteme besonders gefährdet, daß sich in ihnen Fluidsystem-Aufschaukelungen bilden.

Grundsätzlich kann die Beaufschlagung des Fluides im Druckantrieb mit den Mikro-Druckschwankungen nach jedem hierfür geeigneten Verfahren bzw. mittels jeder hierfür geeigneten Einrichtung durchgeführt werden, beispielsweise durch eine Einrichtung zur alternierenden Veränderung des Innenvolumens des Druckantriebes. Bevorzugt wird aber der fluidische Druckantrieb dadurch mit Mikro-Druckschwankungen beaufschlagt, daß in ihn alternierend geringe Fluidströme eingeleitet und aus ihm wieder abgeführt werden, die Mikro-Druckschwankungen also mit Hilfe pneumatischer Leistungssignale initiiert werden. Hierzu wird gemäß einer bevorzugten Ausführungsform des Verfahrens eineim Vergleich zu gesamten Fluidmenge im Druckantrieb geringe - erste Mikro-Fluidströmung in den Druckantrieb dauernd, d.h. unabhängig von der jeweiligen Regelabweichung eingeleitet. Die Richtung der im Bereich kleiner Regelabweichungen hierdurch hervorgerufen Mikro-Druckänderung wird nun dadurch alternierend umgekehrt, daß zusätzlich mit der Abführung einer zweiten Mikro-Fluidströmung, die ebenfalls gering, jedoch größer als die erste Fluidströmung ist, aus dem Druckantrieb begonnen wird, sobald die Regelabweichung einen ersten (oberen) innerhalb des (ersten) Bereiches kleiner Regelabweichungen liegenden Schwellwert erreicht hat. Da die aus dem Druckantrieb abgeführte zweite Mikro-Fluidströmung größer als die in den Druckantrieb eingeführte erste Mikro-Fluidströmung ist, ergibt sich aus der Überlagerung dieser beiden Mikro-Fluidströmungen eine aus dem Druckantrieb herausführende resultierende Fluidströmung. Der Druck im Druckantrieb sinkt demnach ab. Sobald nun die Regelabweichung auf einen zweiten (unteren), ebenfalls innerhalb des (ersten) Bereiches kleiner Regelabweichungen liegenden Schwellwert abgesunken ist, wird die Abfuhr der zweiten Mikro-Fluidströmung aus dem Druckantrieb beendet. Da nun wieder nur noch die erste Mikro-Fluidströmung in den Druckantrieb eingeleitet wird, steigt der Druck im Druckantrieb wieder an bzw. wird die Regelabweichung auf den Wert Null zurückgeführt und danach wieder erhöht, bis sie wieder den ersten (oberen) Schwellwert erreicht hat. Dieser Vorgang wiederholt sich laufend im Bereich kleiner Regelabweichungen. Diese Art der pneumatischen Regelung ermöglicht es, auf an sich bekannte Mittel zur Steuerung von Fluidströmungen zurückgreifen zu können. Hinzu kommt, daß die Mikro-Druckschwankungen insoweit eine konstante Größe aufweisen, als die Druckänderung pro Zeiteinheit im fluidischen Druckantrieb, also die Druckänderungs-Geschwindigkeit, jeweils bei Beaufschlagung des Druckantriebes mit der ersten Mikro-Fluidströmung sowie mit der sich aus der Überlagerung der ersten und zweiten Mikro-Fluidströmung ergebenen resultierenden Mikro-Fluidströmung im wesentlichen konstant ist - ausgenommen sind hierbei die Bereiche, in denen die Richtung der Druckänderung umgekehrt wird, d.h. die Bereiche der jeweiligen Druck-Spitzenwerte der Mikro-Druckschwankungen (Verfahren gemäß Anspruch 2).

Gemäß einer weiteren bevorzugten Verfahrensform kann die vorgenannte Verfahrensvariante auch insoweit umgekehrt werden, daß eine - im Vergleich zur gesamten Fluidmenge im Druckantrieb geringe erste Mikro-Fluidströmung aus dem Druckantrieb dauernd abgeführt und die Richtung einer hierdurch im Druckantrieb hervorgerufenen Mikro-Druckänderung im Bereich kleiner Regelabweichungen dadurch alternierend umgekehrt wird, daß zusätzlich eine zweite Mikro-Fluidströmung, die ebenfalls gering, jedoch größer als die erste Fluidströmung ist, jedesmal dann in den Druckantrieb eingeleitet wird, sobald die Regelabweichung einen zweiten (unteren) innerhalb des (ersten) Bereiches kleiner Regelabweichungen liegenden Schwellenwert erreicht hat, wobei die Zufuhr der zweiten Mikro-Fluidströmung jeweils solange aufrechterhalten wird, bis die Regelabweichung auf einen ersten (oberen), ebenfalls innerhalb des (ersten) Bereiches kleiner Regelabweichungen liegenden Schwellenwert angestiegen ist. Diese Art der Verfahrensführung hat im wesentlichen die gleichen Vorteile wie die vorgenannte Verfahrensvariante. Insbesondere können die Mikro-Druckschwankungen hierbei - wie bei der vorgenannten Verfahrensvariante - dadurch gesteuert werden, daß lediglich die Fluidzufuhr - bei der vorgenannten Variante die Fluidabfuhr - istwertabhängig gesteuert wird (Anspruch 3).

Gemäß einer weiteren bevorzugten Ausführungsform der Erfindung kann alternativ die Beaufschlagung des Fluides im Druckantrieb mit den Mikro-Druckschwankungen im Bereich kleiner Regelabweichungen dadurch herbeigeführt werden, daß eine - im Vergleich zur gesamten Fluidmenge im Druckantrieb - geringe Mikro-Fluidströmung abwechselnd in den Druckantrieb eingeleitet und aus diesem wieder abgeführt wird, wobei die Richtung dieser Mikro-Fluidströmung jeweils dann umgekehrt wird, wenn die Regelabweichung den ersten (oberen) oder den zweiten (unteren) Schwellwert innerhalb des (ersten) Bereiches kleiner Regelabweichungen erreicht hat. Bei dieser Ausführungsform des Verfahrens wird demnach nicht dauernd, also unabhängig von den Regelabweichungen, eine Mikro-Fluidströmung dem Druckantrieb zu- oder abgeführt. Insbesondere werden hierbei nicht zwei einander gegenläufige Mikro-Fluidströmungen in ihrer Wirkung einander überlagert. Diese Verfahrensvariante hat insbesondere den Vorteil, daß bei ihr auch mit gleich großen Mikro-Fluidströmungen gearbeitet werden kann (Anspruch 4).

Zur Durchführung der vorbeschriebenen drei Verfahrensvarianten weist der zur Beaufschlagung des Druckantriebes mit den Mikro-Druckschwankungen ausgelegte Steuereingang eine elektrisch ansteuerbare Einrichtung für die Fluidzufuhr oder -abfuhr in den oder aus dem Druckantrieb auf, wobei der effektive Strömungsquerschnitt der Fluidzufuhr/-abfuhr-Einrichtung so klein ist, daß der von ihm durchgelassene Fluidstrom den Druck nur geringfügig ändert (Anspruch 13).

Vorzugsweise weist hierzu die elektrisch ansteuerbare Fluidzufuhr/-abfuhr-Einrichtung ein elektro-pneumatisches Regelventil auf (Anspruch 14), das zur Durchführung des Verfahrens nach Anspruch 4 vorzugsweise als Drei-Weg-Ventil, insbesondere Drei-Weg-Membranventil ausgestaltet ist (Anspruch 15).

Die effektiven Strömungsquerschnitte der zur Einleitung der Mikro-Druckschwankungen vorgesehenen Fluidzufuhr/-abfuhr-Einrichtung sind vorzugsweise zur Durchführung der eingangs genannten drei Verfahrensvarianten, d.h. der Verfahrensvarianten nach einem der Ansprüche 1 bis 3 unterschiedlich groß (Anspruch 17). Zur Durchführung der ersten beiden Verfahrensvarianten, d.h. der Verfahrensvarianten nach den Ansprüchen 2 und 3 ist hierbei die Fluidzufuhr/-abfuhr-Einrichtung so geschaltet, daß der kleinere Strömungsquerschnitt dauernd, der größere Strömungsquerschnitt dagegen nur bei Ansteuerung durch einen ersten Schwellenschalter des Diskriminators offen ist, wobei der erste Schwellenschalter wiederum so geschaltet ist, daß er ein Steuersignal dann an die Fluidzufuhr/-abfuhr-Einrichtung abgibt, wenn die Regelabweichung einen ersten - oder stattdessen einen zweiten - Schwellwert innerhalb des (ersten) Bereiches kleiner Regelabweichungen erreicht hat (Anspruch 18).

Hierbei kann die Fluidzufuhr-/abfuhr-Einrichtung statt eines Drei-Weg-Ventils lediglich ein Zwei-Weg-Ventil und eine zusätzlich Drossel 6 aufweisen, wobei die Drossel den kleineren effektiven Strömungsquerschnitt hat (Anspruch 19).

Gemäß einer besonders bevorzugten Ausführungsform des Verfahrens wird die vom Meßausgang des Istwertfühlers bis zum Ausgang der Komparator/Regler-Einheit vorgenommene Signalgewinnung und verarbeitung elektrisch/elektronisch durchgeführt. Hierzu eignen sich bevorzugt ein Sollwertgeber, ein Istwertfühler und eine Komparator/Regler-Einheit, einschließlich des Diskriminators, die als elektrische/ elektronische Signal-Gewinnungs/Verarbeitungselemente ausgelegt sind (Ansprüche 5 und 12).

An dieser Stelle erscheinen einige allgemeinere Ausführungen angebracht. Regelsysteme lassen sich in zwei Funktionseinheiten unterteilen. Die erste Einheit verarbeitet im Prinzip Informationen bzw. leistungslose Signale. Die zweite Einheit befaßt sich mit der eigentlichen Leistungsregelung. Hierzu muß ein Leistungssignal erzeugt werden, das imstande ist, das Stellorgan, beispielsweise Schieber, Klappen etc. steuernd zu bewegen (in Position zu halten oder (rasch) zu verändern), und dies unabhängig von momentanen Störungen, z. B. aufgrund unerwünschter Reibverhältnisse. Die Leistungsregelung verlangt häufig große Kraft und schnelle Reaktion. Der rasche Einsatz großer Kräfte kann aber - so dachte man bisher - nur über Elemente mit entsprechend großem Querschnitt erfolgen. Tatsächlich trifft diese Überlegung aber jedenfalls dann nicht zu, wenn die Leistungssignale und die zu diesen korrespondierenden Kräfte fluidisch erzeugt und übertragen werden. Dies gilt auch dann, wenn die fluidischen, insbesondere pneumatischen Leistungssignale über beachtliche Distanzen, beispielsweise mit Hilfe von Kunststoffschläuchen übertragen werden. Die Miniaturisierung pneumatischer Regelelemente hat nicht - wie in der Mechanik oder der Elektrotechnik - eine Miniaturisierung der Kräfte zur Folge. Vielmehr können die Kräfte gleich groß gehalten werden. Die Miniaturisierung pneumatischer Elemente zur Leistungsübertragung verkleinert nur die Arbeit pro Zeiteinheit, d.h. die Leistung. Ein Miniatur-Pneumatikventil kann genauso mit $0,5 \times 10^5$ N/m² (0,5 bar) Druckluft betrieben werden wie ein großes Pneumatikventil. Es regelt aber nicht derjenige am besten, der mit möglichst hoher Leistung einen Stellantrieb oder ein Stellorgan hin- und herbewegt, sondern derjenige, der mit möglichst geringer Arbeit in genau der richtigen Richtung eine Korrektur der Regelabweichung vornimmt. Möglicherweise ist das bisher bei fluidischen Regelsystemen immer wieder beobachtete und gefürchtete Pendeln des Fluids, d.h. die Fluid-Systemaufschaukelungen auf die Verwendung zu hoher Leistungssignale zurückzuführen. Die Erfindung macht nun aus den bisherigen Nöten eine Tugend. Der fluidische Druckantrieb wird bewußt dauernd mit Mikro-Druckschwankungen beaufschlagt, und zwar mit Hilfe von Mikro-Fluidströmen, die über entsprechende miniaturisierte Pneumatikventile gesteuert werden.

Wie bereits in den vorstehenden Ausführungsbeispielen angesprochen, wird nach der Erfindung auch ein Regelsystem verwendet, das aus einer Kombination elektrisch/elektronischer Bauelemente und nachgeschalteter fluidischer Bauelemente besteht. Die Schnittstellen zwischen den elektrischen/elektronischen Bauelementen und den fluidischen Bauelementen sind hierbei an die Punkte des Regelsystems gelegt, wo erstmalig tatsächlich Leistungssignale benötigt werden. Die vorzugsweise mit Gleichstrom bzw. Gleichspannung betriebenen elektrisch/elektronischen Bauelemente gewährleisten eine hohe Genauigkeit der Informationssignale. Einige Vorteile der pneumatischen Elemente zur Erzeugung und Übertragung der Leistungssignale wurden bereits angesprochen. Hinzu kommen noch weitere Vorteile. So hat beispielsweise die Verwendung des erfindungsgemäßen Regelsystems in einer Getreidemühlenanlage den Vorteil, daß die an den Anlageelementen steuernd eingreifenden Teile nicht elektrisch versorgt werden müssen. Eine elektrische Versorgung von Stellgliedern hat häufig eine hohe Explosionsgefahr in der Getreidemüllerei zur Folge, da der Getreidestaub häufig sehr explosiv ist. Einen besonderen Vorteil hat auch die bereits angesprochene Verwendung des Membranventils, das entsprechend der von ihm gesteuerten Mikro-Fluidströmung sehr klein ist. So weist beispielsweise die Ventilbohrung einen Durchmesser auf, der 1 mm oder weniger beträgt, beispielsweise $\pi/4$.

Auch die Masse des Membrankörpers ist sehr gering. Das Membranventil weist vorzugsweise eine als Feder ausgebildete Ventilplatte auf. Dies hat zur Folge, daß bei einer Umsteuerung des Drei-Weg-Membranventils keine mit Reibung behaftete Bewegung auftritt-abgesehen vom inneren Federweg (oder der Bewegung innerhalb des Federstahls). Die Lebensdauer eines derartigen Ventils ist industriell gesehen praktisch unbeschränkt. Da die Membrane - oder ein entsprechend membranartiger Anker - in diesem Miniatur- oder Fein-Ventil nur einen sehr kleinen Weg zurücklegt, können sehr hohe Schaltfolgen erzielt werden. Anzumerken ist hierbei noch, daß das Drei-Weg-Ventil im wesentlichen nur zwischen zwei diskreten, also insoweit digitalen Schaltzuständen hin- und herschaltet. Vergleicht man nun mit diesem Membranventil ein handelsübliches Elektromagnetventil mit einer infolge reiner Alterungserscheinungen begrenzten Lebensdauer von 10 Jahren, dann ist folgendes festzustellen. Die Lebensdauer derartiger Elektromagnetventile im Hinblick auf Verschleiß, Verbrauch usw. bewegt sich nach den Erfahrungen der Anmelderin bei maximal 20 000 000 Schaltungen; dies unter normalen Bedingungen. Wird nun ein Ventil pro Sekunde einmal geschaltet, ergeben sich pro Jahr zwischen 20 000 000 und 30 000 000 Schaltungen. Die Lebensdauer des genannten handelsüblichen Elektromagnetventils liegt demnach bei einer Schaltfrequenz von etwa 1 Hz im Dauerbetrieb bei maximal einem Jahr.

Im Anlagebau, insbesondere für Getreidemühlenanlagen, erwartet der Kunde aber eine durchschnittliche Lebensdauer von wenigstens 10 Jahren. Hinzu kommt, daß viele Getreidemühlenanlagen in Meeresnähe gebaut werden. In diesem Bereich wird die Lebensdauer der Anlageelemente erfahrungsgemäß wegen der salzhaltigen, feuchten Luft reduziert. Für eine verschleißbedingte Lebensdauer von 10 Jahren müßte ein Ventil, das pro Sekunde einmal geschaltet wird, 200 000 000 bis 300 000 000 Schaltungen unter Normalbedingungen überstehen. Ein von der Anmelderin durchgeführter Dauertestversuch hat ergeben, daß das von ihr zur Steuerung der Mikro-Fluidströmungen eingesetzte Fein-Membran-Ventil bereits mehrere Milliarden bzw. Billionen,

d.h. mehrere $10^9$ Schaltungen hinter sich hat und noch einwandfrei arbeitet.

Bevorzugt wird für eine normale Mühlenleistung, beispielsweise zur kontinuierlichen Regelung der Dosierung eines fallenden Getreidestromes oder der Dosierung der Wasserzufuhr zum Getreide mit einer mittleren Schalthäufigkeit von 1 bis 50, besonders bevorzugt 5 bis 20 Schaltungen pro Sekunde gearbeitet. Dies entspricht einer mittleren Schwankungshäufigkeit der Mikro-Druckschwankungen von 1 bis 50, vorzugsweise 5 bis 20 Schwankungen pro Sekunde (Ansprüche 6 und 7).

Gemäß einer weiteren bevorzugten Verfahrensvariante wird der Stellantrieb das Stellorgan bei großen Regelabweichungen proportional zur Größe der Regelabweichungen bewegt (Anspruch 8).

Zur Durchführung dieses Verfahrens weist die Regelanordnung vorzugsweise einen Fensterdiskriminator auf, der die bereits beschriebenen Grob-Diskriminationssignale im Falle großer Regelabweichungen abgibt, wobei zusätzlich ein elektrisch ansteuerbares fluidisches Grobeinlaßventil sowie ein elektrisch ansteuerbares fluidisches Grobablaßventil für die Zufuhr sowie die Abfuhr von Fluid in den bzw. aus dem Druckantrieb vorgesehen sind. Hierbei ist jeweils ein Steuereingang jedes Grobventils jeweils einem der Grob-Diskriminationssignal-Ausgänge zugeordnet bzw. mit diesem verbunden. Die Grobventile sind hierbei so ausgelegt, daß deren Strömungsquerschnitt proportional zur Regelabweichung steuerbar ist. Die Feinventil-Einrichtung, d.h. die zur Beaufschlagung des Druckantriebes mit den Mikro-Druckschwankungen vorgesehene Fluidzufuhr/-abfuhr-Einrichtung ist hierbei so ausgelegt, daß es hinsichtlich seines effektiven Strömungsquerschnittes im wesentlichen zwischen zwei diskreten Werten umsteuerbar ist. Diese Kombination zwischen proportionaler Regelung bzw. Korrektur der Regelabweichung einerseits und zwischen zwei Werten hin- und herpendelnden Korrektur der Regelabweichung andererseits ermöglicht eine für praktische Regelverhältnisse, insbesondere in einer Mühlenanlage optimale Regelung. Auf diese Weise ist das Regelsystem zur Regelung von Regelgrößen mit beliebig großen Regelabweichungen einsetzbar. Bei einer großen Regelabweichung wird vom Regler bzw. Diskriminator ein Stellbefehl an das Grobventil gegeben, das Stellorgan mittels des Stellantriebs rasch in den Bereich kleiner Regelabweichungen zu fahren. Ist nun dieser Bereich erreicht, dann wird das Grobventil geschlossen und mit der Beaufschlagung des Stellantriebes d.h. hier des Druckantriebes, mit den Mikro-Druckschwankungen begonnen. Würden hingegen für die Regelung lediglich die Grobventile verwendet, wäre eine Aufschaukelung des Regelkreises unvermeidlich und damit die Aufgabe einer guten Dosierung nicht lösbar (Anspruch 20).

Es ist zwar an sich aus der deutschen Auslegeschrift 17 63 152 vom 23. März 1972 (Messerschmitt-Bölkow-Blohm GmbH) bekannt, bei einem Zweipunktregler einen, vorzugsweise fluidischen, Diskriminator vorzusehen, welcher die Regelabweichungen in einen Grob-Bereich und einen Fein-Bereich unterteilt. Mit dem bekannten Zweipunktregler wird aber grundsätzlich in sämtlichen Bereichen nach dem gleichen Prinzip geregelt, insbesondere werden dort in keinem Bereich Druckschwankungen oder Mikro-Druckschwankungen in das Regelsystem eingeführt. Auch weist der vorbekannte Zweipunktregler keinen fluidischen Stellantrieb auf. Im übrigen befaßt sich die vorbekannte Lehre mit der Aufgabe, einen Zweipunktregler zu schaffen, der bei möglichst kleinem Schaltungsaufwand eine annähernd optimal schnelle Rückführung der jeweils auftretenden Regelabweichung auf den Wert Null ermöglicht, wobei insbesondere bei kleineren Regelabweichungen keine zusätzlichen Verlängerungszeiten eingeführt werden sollen. Zur Lösung dieser Aufgabe sind die Stufenbreiten des Diskriminators so gewählt, daß deren Werte einer speziellen mathematischen Funktion genügen und festliegende Umschaltgrenzen, an denen eine Invertierung des Stellbefehls bzw. der Stellgröße erfolgt, haben.

Gemäß einer weiteren bevorzugten Ausführungsform der Erfindung sind die für die Beaufschlagung des Stellantriebes mit den Mikro-Druckschwankungen vorgesehene Einrichtung einerseits und die Grobventile andererseits fluidisch parallelgeschaltet, so daß sie sich im Grobbereich dann wechselseitig ergänzen, wenn dem Stellantrieb dauernd, d.h. auch in den Grob-Bereichen, entweder eine Mikro-Fluidströmung zugeführt oder statt dessen eine Mikro-Fluidströmung abgeführt wird (Anspruch 21).

Um den maximalen Strömungsquerschnitt für die Grobventile von vornherein einstellen zu können, ist vorzugsweise zwischen den fluidischen Druckantrieb einerseits und die Regelventile andererseits eine einstellbare Grob-Drossel geschaltet (Anspruch 22).

Einem entsprechenden Zweck dient eine in den Mikro-Fluidströmungs-Weg geschaltete Fein-Drossel. Mit dieser ist dann zumindest der eine der beiden diskreten Werte für die Mikro-Fluidströmung beliebig vorwählbar (Anspruch 23).

Die Erfindung umfaßt auch die Anwendung des beanspruchten Verfahrens zur kontinuierlichen Regelung der Dosierung eines fallenden Getreidestromes und/oder der Wasserzufuhr zu Getreide in einer Getreidemühlenanlage (Ansprüche 9 und 10).

Nachstehend wird die Erfindung anhand von Ausführungsbeispielen noch näher erläutert, wobei auf die beigefügten schematischen Zeichnungen bezug genommen wird.

In den Zeichnungen zeigen:

Fig. 1 eine vereinfachte schematische Darstellung eines wesentlichen Ausschnittes aus einem ersten Ausführungsbeispiel der Erfindung;

Fig. 2 eine vereinfachte schematische Darstellung eines weiteren Ausführungsbeispiels der Erfindung;

Fig. 3, 3A, 3B grafische Darstellungen zur Erläuterung des Verlaufes des Druckes im Druckantrieb und der Regelabweichung;

Fig. 4 und 5 Anwendungen des anhand der Fig. 2 erläuterten Regelprinzips;

Fig. 6 ein Schaltschema eines Ausführungsbeispieles eines Teils des Regelkreises (Arbeitselektronik);

Fig. 7 ein weiteres Ausfürungsbeispiel zur Regelung der Dosierung von Wasser und

Fig. 8 ein Ausführungsbeispiel der Erfindung zur gleichzeitigen Regelung der Dosierung von Getreide und Wasser.

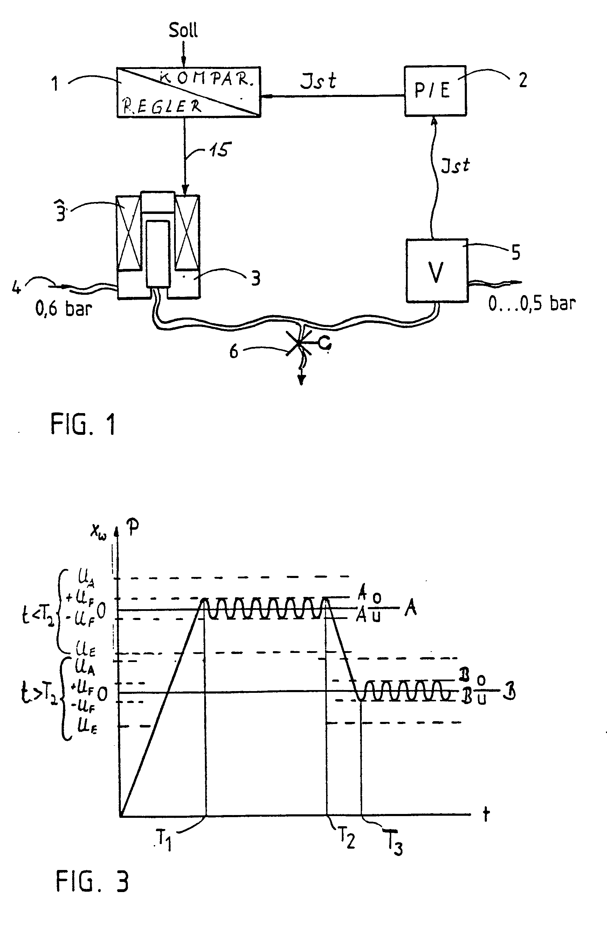

In der Figurenbeschreibung werden für (im Sinne der Erfindung) funktionell gleiche Teile gleiche Bezugszeichen verwendet. In den verschiedenen Ausführungsbeispielen vorgenommene Modifikationen dieser funktionell gleichen Teile werden durch hochgestelle Striche (') neben den zugehörigen Bezugszeichen kenntlich gemacht. Im übrigen gilt für die schematischen Darstellungen in den Figuren 1 bis 6 folgendes: gerade Linien bedeuten elektrische Informations-Signalleitungen, einfache Schlangenlinien pneumatische Informations-Signalleitungen und doppelte Schlangenlinien pneumatische Leistungs-Signalleitungen.

Figur 1 zeigt schematisch einen wesentlichen Teil eines Ausführungsbeispiels des erfindungsgemäßen Regelkreises. Hierbei sind der Einfachheit halber der Komparator und der Regler zu einer Regler/Komparator-Einheit 1 zusammengefaßt. Vom Stellglied - dieses enthält üblicherweise den Stellantrieb bzw. -motor und das vom Stellantrieb betätigte Stellorgan (z. B. Schieber, Klappe etc.) - ist lediglich der Stellantrieb 5 dargestellt. Er ist im Rahmen vorliegender Erfindung als fluidischer Druckantrieb bzw. als pneumatischer Verbraucher V ausgebildet. Der pneumatische Verbraucher V soll hierbei nur eine geringe Menge Luft verbrauchen. Im übrigen ist aus Gründen der zeichnerisch einfacheren Darstellung in Figur 1 das Istwertsignal "Ist" aus dem Verbraucher V herausgeführt, obwohl es bei einer tatsächlichen Realisierung üblicherweise von einem gesonderten, hinter der Regelstrecke angeordneten Istwertfühler gemessen wird.

Die Komparator/Regler-Einheit 1 arbeitet elektrisch bzw. elektronisch. Demgemäß werden ihr, genauer ihrem Komparatorteil, elektrische Sollwert- und Istwert-Signale jeweils von einer (nicht dargestellten) Sollwertvorgabe-Einrichtung und von einem pneumatisch-elektrischen Wandler 2 zugeführt. Im dargestellten Ausführungsbeispiel liegen die Soll- und Ist-Wert-Signale in Form von Gleichspannung vor. Sie können Werte von 0 bis 10 Volt annehmen. Entsprechend der Abweichung des Istwertes vom Sollwert, im folgenden Regelabweichung genannt, steuert der Regler über eine Leitung 15 ein elektro-pneumatisches Feinventil 3 an, und zwar über dessen Magnetspule 3. Das Feinventil 3 ist hierbei als 2-Wegventil ausgestaltet, das im stromlosen Zustand geschlossen ist und bei Erregung der Magnetspule 3 in den offenen Zustand überführt wird. Es verbindet eine pneumatische Speiseleitung 4 mit einer pneumatischen Fein-Zuleitung 24. Die pneumatische Fein-Zuleitung 24 ist direkt mit dem fluidischen Druckantrieb 5 verbunden. Mit dem Feinventil 3 läßt sich demnach die pneumatische Versorgung des Stellantriebes 5 steuern. Es kann daher als Steuereingang des Stellantriebs aufgefaßt werden. Zwischen das Feinventil 3 und den Stellantrieb 5 ist eine hinsichtlich ihres Strömungsquerschnittes einstellbare Fein-Abströmdrossel 6 geschaltet.

Der Wortbestandteil "Fein" bei den vorgenannten Elementen, nämlich Feinventil 3, Fein-Zuleitung 24 und Fein-Abströmdrossel 6 bedeutet, daß durch die genannten Elemente stets nur geringe Luftmengen transportiert bzw. Drücke übertragen werden.

Beim dargestellten Ausführungsbeispiel ist es wesentlich, daß über die Fein-Abströmdrossel 6 dauernd eine geringe Menge Luft abströmt. Die aus der Fein-Abströmdrossel 6 abströmende Luftmenge ist jedoch kleiner als die Luftmenge, die durch das Feinventil 3 zugeführt werden kann. Das Zusammenwirken der Fein-Abströmdrossel 6 und des Feinventils 3 dient dazu, die auf das Stellorgan wirkende Antriebsrichtung des Stellantriebs 5 bzw. die in ihm herrschenden Druckverhältnisse laufend alternierend ändern zu können.

Statt der Verwendung des geschilderten 2-Weg-Feinventils 3 in Verbindung mit der Fein-Abströmdrossel 6 kann auch ein 3-Weg-Feinventil gewählt werden. Diese Variante hat den Vorteil symmetrischerer Strömungsverhältnisse und einer universelleren Anwendung im Regelsystem.

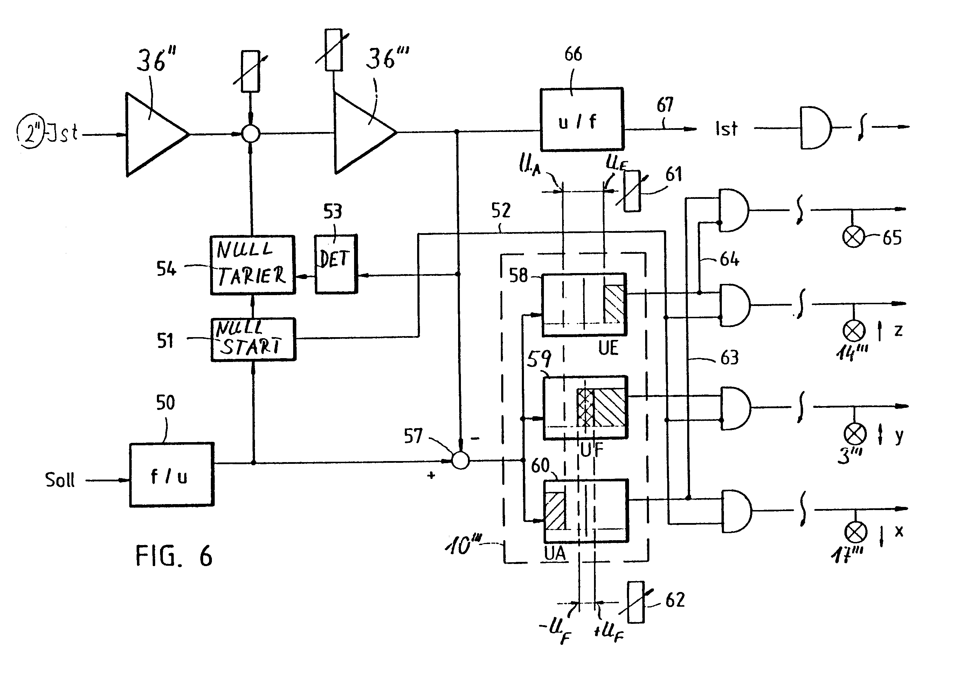

Der in Figur 1 schematisch dargestellte Ausschnitt aus dem Regelkreis arbeitet wie folgt: die Regler/Komparator-Einheit steuert die Magnetspule 3 solange im Sinne einer Erregung an bzw. hält das Feinventil 3 solange offen, bis die Regelabweichung einen ersten Schwellenwert $+U_F$ (s. Fig. 6) erreicht hat. Dieser Schwellenwert liegt innerhalb eines durch zwei weitere Schwellenwerte $U_E$ und $U_A$, im folgenden dritte und vierte Schwellenwerte genannt, begrenzten ersten Bereiches kleiner Regelabweichungen, also innerhalb eines Bereiches, in welchem die Regelabweichung fast Null ist. Ist dieser erste Schwellenwert $U_F$ erreicht, dann wird das Feinventil 3 geschlossen. Die Fein-Abströmdrossel 6 bleibt jedoch nach wie vor offen, so daß der Istwert wieder unter den Sollwert absinkt, und zwar solange, bis ein für die Regelabweichung vorgegebener unterer Schwellenwert $-U_F$ erreicht ist. Bei Erreichen dieses Schwellenwertes wird die Magnetspule 3 wieder von der Regler/Komparator-Einheit 1 im Sinne einer Erregung der Magnetspule 3 angesteuert. Dieser Vorgang wiederholt sich ständig.

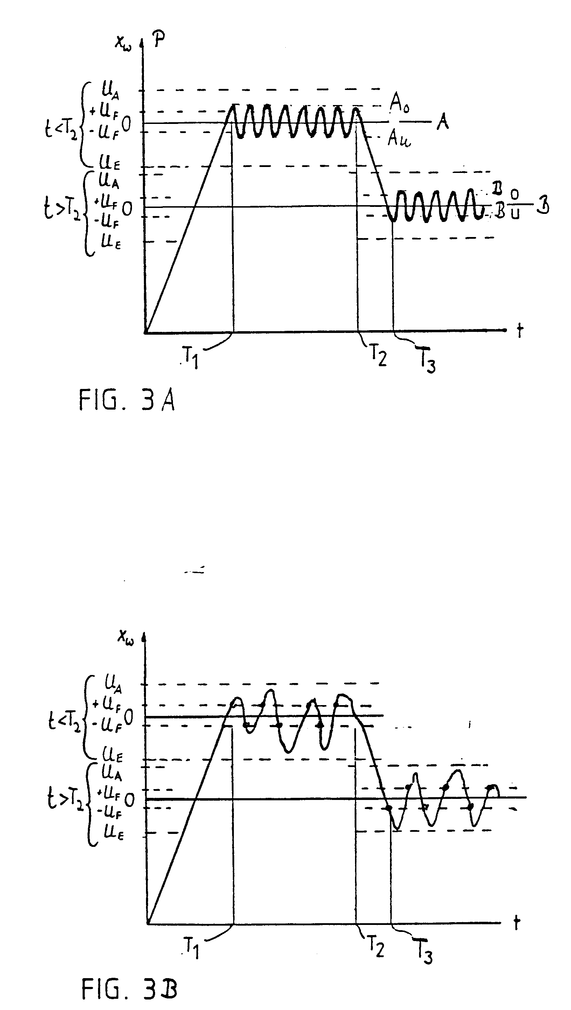

Bei einem Fehlen von Störgrößen - was in der Realität nicht der Fall ist - würden im Ergebnis dem Stellantrieb 5 Mikro-Druckschwingungen aufgeprägt, deren Frequenz wesentlich durch den Abstand zwischen dem ersten und zweiten Schwellwert $+U_F$ und $-U_F$ sowie durch die Strömungsquerschnitte des Feinventils 3 und der Fein-Abströmdrossel 6 bestimmt wird. Da in der Wirklichkeit stets Störgrößen (unbekannter Größe und Richtung) auftreten, die das Istwert-Signal laufend ändern, werden die vorgenannten Mikro-Druckschwingungen zu Mikro-Druckschwankungen "deformiert", die - im Gegensatz zu (reinen) Mikro-Druckschwingungen in der Regel weder eine konstante, vorhersehbare Frequenz noch eine konstante, vorhersehbare Amplitude haben. Die Vorteile dieser Art der Regelung werden anhand der Figur 3 näher erläutert.

Eine Weiterbildung des anhand der Figur 1 erläuterten Prinzips zur Regelung einer Regelgröße ist in Figur 2 dargestellt. Das in Figur 2 dargestellte Ausführungsbeispiel unterscheidet sich im wesentlichen dadurch von dem in Figur 1 dargestellten Ausführungsbeispiel, daß ein Grob-Einlaßventil 14, ein Grob-Abströmventil 17 und ein Fensterdiskriminator 10 vorgesehen sind. Mit Hilfe dieser Elemente lassen sich zusätzlich auch größere Regelabweichungen gut beherrschen. Der Fensterdiskriminator 10 ist derart ausgebildet, daß er zwischen drei Bereichen von Regelabweichungen unterscheiden kann, nämlich dem bereits genannten ersten Bereich kleiner Regelabweichungen, im folgenden auch "Feinbereich" genannt, einem zweiten und einem dritten Bereich, im folgenden jeweils "Grob-Bereiche" genannt, in welchen die Regelabweichungen jeweils außerhalb des Feinbereiches liegen. Die beiden Grobbereiche grenzen zu beiden Seiten an den Feinbereich an, werden also durch den dritten und vierten Schwellwert $U_E$ und $U_A$ von letzterem getrennt.

Auch in diesem Ausführungsbeispiel kann der Sollwert von irgendwoher, zum Beispiel von einem Computer oder direkt mittels eines Bedienungsgerätes 11 vorgegeben werden. Das Bedienungsgerät 11 ist im dargestellten Ausführungsbeispiel unmittelbar an eine Regler/Komparator-Einheit 1' angekoppelt. Den Istwert erhält die Regler/Komparator-Einheit 1' wiederum von einem pneumatischelektrischen Wandler 2'.

Im zweiten (Grob-)Bereich liegt eine derartige Regelabweichung vor, daß eine große Luftmenge in kurzer Zeit dem Stellantrieb 5' bzw. dem Verbraucher V' zugeführt werden muß. Hierzu steuert der Fensterdiskriminator 10 über eine Leitung 13 die Magnetspule 14 des Grob-Einlaßventiles 14 im Sinne einer Erregung an. Das Grob-Einlaßventil 14 wird hierdurch geöffnet, so daß eine vergleichsweise große Luftmenge dem Stellantrieb 5' über die Speiseleitung 4' und die Grob-Zu/Ableitung 23 zugeführt wird. Beim dargestellten Ausführungsbeispiel wird über eine Leitung 15' gleichzeitig die Magnetspule 3' eines Feinventiles 3' mit einem Erregungssignal beaufschlagt, so daß dem Stellantrieb 5' gleichzeitig eine Mikro-Druckluftströmung zugeführt wird.

Hat nun die Regelabweichung den für den Übergang vom zweiten (Grob-)Bereich in den Feinbereich vorgesehenen dritten Schwellenwert $U_E$ erreicht, wird das als 2-Weg-Ventil ausgestaltete Grob-Einlaßventil 14 geschlossen. Sobald das Grob-Einlaßventil 14 geschlossen ist, arbeitet nur noch das Feinventil 3'. Das Feinventil 3' ist in diesem Ausführungsbeispiel als 3-Weg-Ventil ausgestaltet und so geschaltet, daß es bei Erreichen des innerhalb des Feinbereiches liegenden ersten Schwellenwertes $+U_F$ die Mikro-Fluidströmungsrichtung umkehrt, also einen geringen Druckluftstrom aus dem Stellantrieb 5' ausströmen läßt. Bei Erreichen des zweiten Schwellenwertes $-U_F$ wird die Richtung der Mikro-Fluidströmung erneut umgekehrt. Zusätzlich ist noch eine einstellbare Feindrossel 20 in der Feinzuleitung 24' vorgesehen, mit deren Hilfe der effektive Strömungsquerschnitt in der Feinzuleitung 24' geändert werden kann.

Liegt dagegen die Regelabweichung im dritten (Grob-)Bereich muß also aus dem Stellantrieb 5' rasch eine größere Menge Luft abgeführt werden, dann wird die Magnetspule 17 des Grob-Abströmventiles 17 über eine Leitung 18 entsprechend angesteuert. Hierdurch sinkt der Druck im Verbraucher bzw. im Stellantrieb 5' rasch ab, und zwar solange, bis die Regelabweichung den vierten, für den Übergang von diesem Grob-Bereich in den Feinbereich vorgegebenen Schwellenwert $U_A$ erreicht hat.

Für den praktischen Betrieb ist es sehr vorteilhaft, wenn der Fensterdiskriminator 10 so ausgelegt ist, daß dessen drei Diskriminationsbereiche einstellbar sind; ferner, wenn zwischen den Stellantrieb 5' und die Ventile, einschließlich der Feindrossel 20, eine einstellbare Grobdrossel 21 geschaltet ist, mit deren Hilfe der effektive Strömungsquerschnitt für die Grobströmungen durch die Grobventile 14 und 17 veränderbar ist.

Das Grob-Einlaßventil 14 und das Feinventil 3' sind im dargestellten Ausführungsbeispiel parallel geschaltet. Sie addieren sich demnach in ihrer Wirkung, wenn beide im Sinne einer Luftzuführung zum Stellantrieb 5' geöffnet sind. Das Grob-Abströmventil 17 ist ebenfalls parallel zum Feinventil 3' geschaltet. Die Wirkungen auch dieser beiden Ventile addieren sich demnach, wenn beide im Sinne einer Luftabströmung aus dem Verbraucher 5' angesteuert werden.

In Figur 3 sind schematisch für die Regelanordnung gemäß Figur 2 der Druck P im Verbraucher V' bzw. Stellantrieb 5' über der Zeit t grafisch aufgetragen. Hierbei sei - zum Zwecke einer einfachen grafischen Veranschaulichung des erfindungsgemäßen Regelprinzips - angenommen, daß zunächst keine Störgrößen den Regelvorgang beeinträchtigen, d.h. den Istwert ändern, und die Regelanordnung auf einen Richtungswechsel der Mikro-Fluidströmung verzögerungsfrei reagiere. Die Regelanordnung werde nun im Zeitpunkt $t = 0$ eingeschaltet. Da keine Druckluft im Verbraucher V' bzw. Stellantrieb 5' vorhanden ist, wird aufgrund der großen Regelabweichung $x_w$ sofort das Grob-Einlaßventil 14 angesteuert bzw. geöffnet. Nach einer kurzen Zeit, zum Beispiel nach einer Sekunde, hat die Regelabweichung den untersten, d.h. dritten Schwellenwert $U_E$ erreicht bzw. ist der Druck auf einen entsprechenden Wert angestiegen. Die Regelabweichung ist nun so klein geworden, daß sie im Feinbereich liegt und das Grob-Einlaßventil 14 wieder geschlossen wird. Das Feinventil 3', das im dargestellten Ausführungsbeispiel gleichzeitig mit dem Grob-Einlaßventil 14 geöffnet worden ist, wirkt nun alleine. Sobald nun die Regelabweichung den ersten Schwellenwert $+U_F$ erreicht hat bzw. der Druck auf den Wert $A_o$ (oben) angestiegen ist - dies ist der Zeitpunkt $T_1$ -, wird das Feinventil 3' umgesteuert. Da das Feinventil 3' in diesem Ausführungsbeispiel ein 3-Weg-Ventil ist, wird durch diese Umsteuerung nun dessen Luftabfuhrkanal geöffnet. Nun strömt Luft aus dem Verbraucher V' wieder ab. Bei Erreichen des unteren Druckpunktes $A_u$ im Stellantrieb 5' bzw. des zweiten Schwellwertes $-U_F$ innerhalb des Feinbereiches, wird das Feinventil 3' wieder umgesteuert, d.h. es öffnet wieder. Dieser Umsteuervorgang wiederholt sich laufend, und zwar solange wie die Regelabweichung $x_w$ innerhalb des Feinbereiches, also zwischen den dritten und vierten Schwellenwerten $U_E$ und $U_A$, bleibt.

Zu einem späteren Zeitpunkt, beispielsweise zum Zeitpunkt $T_2$, werde nun ein neuer Sollwert eingegeben. Dieser neue Sollwert sei deutlich tiefer als der vorherige Sollwert. Dies hat zur Folge, daß nun die Regelabweichung größer als der vierte Schwellenwert $U_A$ ist, also in den dritten (Grob-)Bereich fällt, mit der Folge, daß der Fensterdiskriminator 10 nunmehr das Grob-Abströmventil 17 im Sinne einer Öffnung ansteuert. Der Druck im Stellantrieb 5' fällt dadurch rasch ab, bis die Regelabweichung den vierten Schwellenwert $U_A$ unterschreitet, also erneut in den Feinbereich fällt. Das Grobventil 17 wird bei Überschreiten dieses Schwellenwertes geschlossen. Das Feinventil 3' hingegen bleibt im Sinne einer geringen Luftabströmung aus dem Stellantrieb 5' geöffnet. Der Druck sinkt weiter bis auf den Wert B ab. Dies bedeutet, daß - unter den eingangs gemachten Voraussetzungen - auch die Regelabweichung immer kleiner wird, den Wert Null erreicht und schließlich auf den zweiten Schwellenwert -U abfällt. Bei Erreichen des Druckpunktes B̲u bzw. des zweiten Schwellenwertes $-U_F$ zum Zeitpunkt $T_3$ wird das Feinventil 3' im Sinne einer Lufteinspeisung wieder geöffnet, und zwar solange, bis der obere Druckpunkt $B_p$ wieder erreicht ist. Es beginnt nun ein neuer Zyklus von Mikro-Druckschwingungen um den neuen Druckpunkt B. Solange die Regelabweichung innerhalb des Feinbereiches bleibt, bleibt lediglich das Feinventil 3' in Aktion und bewirkt die geschilderten Mikro-Druckschwingungen. Diesen Mikroschwingungen, die lediglich unter der eingangs gemachten - der Realität nicht entsprechenden - Voraussetzung eines störgrößenfreien Regelsystems auftreten, kann grundsätzlich eine Frequenz zugeordnet werden. Diese Frequenz hängt vom Abstand zwischen dem ersten und zweiten Schwellenwert $+U_F$ und $-U_F$, von den effektiven Strömungsquerschnitten des Feinventils 3' sowie von der Art des Verbrauchers ab, (der zum Beispiel eine große Membrane oder einen Pneumatikkolben verschiebt), insbesondere vom Volumen von dessen Arbeitsluftkammer, vom Durchmesser von dessen Arbeitsmembrane oder dessen Kolben.

In der Realität reagiert ein Regelsystem, insbesondere eines, dessen Stellantrieb ein fluidischer Druckantrieb ist, nicht verzögerungsfrei auf eine Änderung der Stellgröße - im dargestellten Ausführungsbeispiel also auf eine Änderung des dem Feinventil 3' auf der Leitung 15' zugeführten Steuersignals. Die Richtung der Druckänderung im Stellantrieb 5', insbesondere die Richtung der Änderung der Regelabweichung, wird sich daher beim Umsteuern des Feinventils 3' - also bei Erreichen des ersten oder zweiten Schwellwertes $+U_E$ oder $-U_F$ - nicht schlagartig umkehren. Vielmehr ist ein gewisses "Überschwingen" zu erwarten. Um diese Verhältnisse wiederzugeben, müßten in Fig. 3 die Druckänderungs- bzw. Regelabweichungänderungs-Umkehrpunkte $A_o$ und $B_o$ oberhalb des ersten Schwellenwertes $+U_F$ und $A_u$ und $B_u$ unterhalb des zweiten Schwellenwertes $-U_F$ liegen. Dies ist in Fig. 3A berücksichtigt worden.

Ferner muß in der Realität stets davon ausgegangen werden, daß (externe) Störgrößen auf den Regelvorgang einwirken andernfalls bedürfte es einer Regelung nicht. Dies hat zur Folge, daß auf den Istwert - und damit auch auf die Regelabweichung - nicht nur die zuvor geschilderten Mikro-Fluidströmungen durch das Feinventil 3' (oder das Feinventil 3 nebst Feinabströmdrossel 6) bzw. die hierdurch initiierten Druckänderungen im Stellantrieb 5' (oder 5) einwirken, sondern zusätzlich auch noch die (externen) Störgrößen. Da der zeitliche Verlauf, insbesondere die Anzahl, die Größe und die Richtung der Störgrößen nicht vorhersehbar ist, in der Regel also eine stochastische Funktion ist, zeigt die bisher betrachtete Kurve der Regelabweichungen in der Realität weder eine Periodizität noch eine konstante Amplitude im engeren Sinne, d.h. weder konstante Zeitabstände zwischen benachbarten Nulldurchgängen noch konstante Spitzenwerte. Vielmehr ist deren Verlauf nicht determinierbar. Allenfalls könnte noch von einer mittleren Periode bzw. Frequenz und einer mittleren Amplitude gesprochen werden. Im folgenden werden jdoch stattdessen die Ausdrücke "mittlere Schwankungshäufigkeit" und "mittlerer Spitzenwert" verwendet. Beispielsweise könnte eine reale Kurve der Regelabweichungen $x_w$ im Feinbereich den in Fig. 3B gezeigten Verlauf haben. Entsprechendes gilt für den Druckverlauf im Stellantrieb.

Versuche haben ergeben, daß hinsichtlich des Abstandes zwischen den innerhalb des Feinbereiches liegenden ersten und zweiten Schwellwerten $+U_F$ und $-U_F$ die besten Ergebnisse in der Praxis mit der feinsten Einstellung von an sich im Handel erhältlichen Fensterdiskriminatoren gemacht wurden. Ferner wurde gefunden, daß ein optimales Verhältnis der Durchmesser von Membranfläche zu Öffnung des Feinventils zwischen 50 : 1 bis 300 : 1 liegt, wobei der Durchmesser der Ventilöffnung beispielsweise 1 mm sein kann.

Aufgrund des innerhalb eines sehr engen Bereiches, des Feinbereiches, durchgeführten Vergleichs zwischen dem Soll-Wert und den Ist-Werten, steuert der Fensterdiskriminator 10 das Feinventil 3' in rascher Folge um, beispielsweise häufig schon nach einer Zehntel Sekunde. Demgemäß hat der Umsteuerzyklus eine vergleichsweise hohe mittlere Schwankungshäufigkeit f, beispielsweise 5 Schwankungen/Sekunde. Aus dem bisher Gesagten ergibt sich, daß innerhalb des Feinbereichs im Regelkreis, genauer im Stellantrieb 5 bzw. 5' eine Druckschwankung initiiert wird. Versuche haben gezeigt, daß derartige Schwankungen nicht stören, sondern - im Gegenteil - eine äußerst genaue Regelung mit hoher Empfindlichkeit ermöglichen. Mittels der in den Stellantrieb eingeleiteten Mikro-Druckschwankungen wird gleichsam jede Abweichung des Istwertes vom Sollwert relativ früh erfaßt bzw. abgetastet und entsprechend geregelt. Dies ist auch der Grund dafür, daß sich der Regelkreis infolge der Mikro-Druckschwankungen nicht aufschaukelt, sondern Aufschaukelungen sogar verhindert werden.

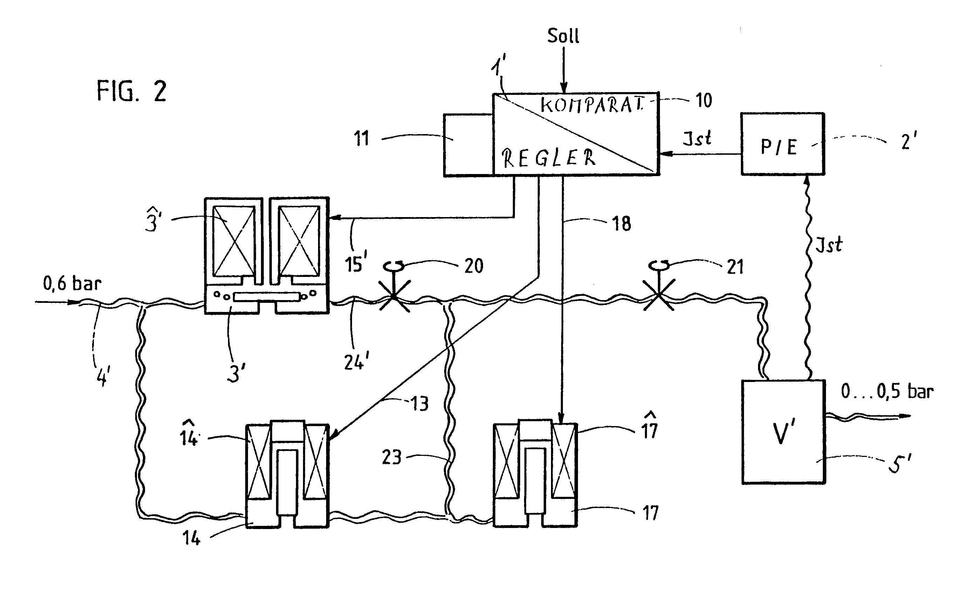

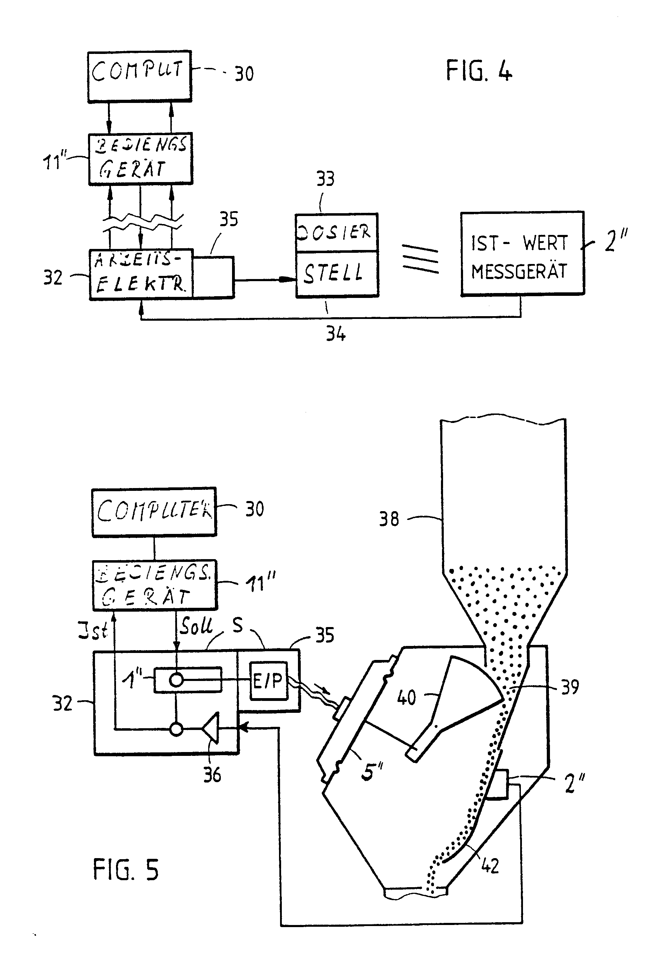

In den Figuren 4 und 5 sind Anwendungen des anhand der Figur 2 erläuterten Regelprinzips veranschaulicht.

Gemäß den Figuren gibt ein Anlage-Computer 30 die gewünschte Soll-Leistung, zum Beispiel 24 Tonnen pro Stunde, einem Bedienungsgerät 11'' ein. Der Anlage-Computer 30 erhält über das Bedienungsgerät 11'' laufend die Istwerte. Diese Istwerte sowie die Mengenimpulse, zum Beispiel ein Impuls pro 10 kg, werden zur Bildung der Totalmenge einer Charge oder einer anderen Einheit pro Zeit im Anlage-Computer 30 aufsummiert.

Das Bedienungsgerät 11'' ist direkt mit einer Arbeitselektronik 32 verbunden. Die beiden Geräte können unmittelbar körperlich - oder über entsprechende Informationsleitungen von bis zu 100 m Länge - miteinander verbunden sein. Das Bedienungsgerät 11'' weist für den Fall, daß kein Anlage-Computer 30 vorhanden ist, alle erforderlichen Bedienungselemente und Anzeigeninstrumente auf, auch für den sogenannten Handbetrieb. Das Bedienungsgerät 11'' ist grundsätzlich vom Computerbetrieb auf den Handbetrieb und umgekehrt umsteuerbar.

Die Arbeitselektronik 32 enthält im wesentlichen eine Regler/Komparator-Einheit 1'' und kann baulich mit einem elektro-pneumatischen Wandler 35 verbunden sein, so daß insgesamt ein Bausatz bzw. ein Steuergerät S entsteht. Der elektro-pneumatische Wandler 35 enthält die vorerwähnten Ventile 14, 3' und 17 sowie die Drosseln 20 und 21. Die Ausgänge des elektro-pneumatischen Wandlers 35 steuern ein Stellglied 34, welches als Stellantrieb 5'' einen pneumatischen Membranantrieb und als Stellorgan 40 einen Schieber enthält. Das Stellglied 34 seinerseits kann wiederum baulich mit einem Dosierteil 33 verbunden sein. Der Dosierteil 33 ist symbolisch in Figur 5 durch den Auslaufabschnitt eines Getreidebehälters 38 nebst Auslauföffnung 39 dargestellt. Der Schieber 40 steuert nun den Öffnungsquerschnitt der Auslauföffnung 39.

Der frei fallende Getreidestrom wird unmittelbar nach dem Schieber 40 mittels einer Prallplatte 42 abgelenkt. Die hierdurch auf die Prallplatte 42 wirkende Kraft wird über einen als Kraftaufnehmer ausgebildeten Istwertfühler 2'' in ein entsprechendes elektrisches Istwert-Signal umgewandelt und in einem in der Arbeitselektronik 32 vorgesehenen Verstärker 36 verstärkt. Das verstärkte Istwert-Signal wird einerseits der Regler/Komparator-Einheit 1'' und andererseits dem Bedienungsgerät 11'' zugeführt.

Bei dem in Figur 5 dargestellten Ausführungsbeispiel wurde der Regelkreis zur Regelung einer Getreidedosierung verwendet. Stattdessen kann der Regelkreis auch zur Dosierung von Wasser eingesetzt werden.

Die Figur 6 zeigt schematisch ein Ausführungsbeispiel eines Schaltschemas für die Arbeitselektronik 32. Die Arbeitselektronik 32 wird hierbei (üblicherweise) mit 24 Volt Gleichspannung versorgt. Im dargestellten Ausführungsbeispiel wird der Sollwert zunächst in Form einer Soll-Frequenz der Arbeitselektronik 32 zugeführt und dort mittels eines Frequenz/Spannungswandlers 50 in eine Sollwert-Spannung umgeformt. Die Sollwertspannung kann Werte zwischen 0 bis 10 Volt annehmen. Bei einem Sollwertsprung von 0 auf einen bestimmten Spannungswert wird mittels eines Nullstarters 51 ein Startsignal gegeben. Das Startsignal verriegelt für eine bestimmte Zeit über einen Leiter 52 die Ausgänge eines Feinventils 3''', eines Grob-Einlaßventils 14''' sowie eines Grob-Abströmventils 17'''. Gleichzeitig wird die Regelanordnung mit Hilfe eines Nullpunkt-Detektors 53 sowie einer Nulltarierungs-Automatik 54 automatisch tariert. Dabei wird die momentane Tarakraft des (noch unbelasteten) Kraftaufnehmers 2'' (Fig.5) über den Verstärker 36 (Fig. 5) bzw. einen Vorverstärker 36'' und einen nachgeschalteten Nachverstärker 36''' (Fig. 6) festgestellt. Die so festgestellte momentane Tarakraft wird als entsprechendes elektrisches Signal über den Nullpunkt-Detektor 53 in die Nulltarierungs-Automatik 54 eingespeichert. Nach Beendigung der Nullung, beispielsweise nach ein bis zwei Sekunden, wird die Ventilverriegelung wieder aufgehoben. Der Regelkreis ist nun für seine eigentliche Regelfunktion bereit.

Der vorgegebene Sollwert wird dann im Komparatorabschnitt der Regler/Komparator-Einheit 1'' mit dem vom (nunmehr belasteten) Kraftaufnehmer bzw. Istwertfühler 2'' gemessenen Istwert verglichen. Hierzu ist ein Summenpunkt 57 vorgesehen. Die Differenz zwischen dem Istwert und dem Sollwert, also die Regelabweichung, wird einem Fensterdiskriminator 10''' zugeführt. Dieser erzeugt dann - wegen der zu Beginn der Regelung noch großen Regelabweichung - ein zweites Grob-Diskriminationssignal Z zum Öffnen des Grob-Einlaßventiles 14'''. Dieses Grob-Diskriminationssignal Z bewirkt über die Membran 5'' und den von der Membran 5'' gesteuerten Schieber 40 (Fig. 5) eine vollständige Freigabe der Auslauföffnung 39.

Sobald die Regelabweichung den dritten Schwellenwert $U_E$, also die Grenze zwischen dem Grobbereich und dem Feinbereich erreicht hat, gibt ein zweiter Schwellenwertschalter 58 ein Grob-Diskriminationssignal Z zum Schließen des Grob-Einlaßventils 14''' ab. Danach beginnt die bereits beschriebene Regelung innerhalb des Feinbereiches. Hierzu weist der Fensterdiskriminator 10''' einen ersten Schwellenwertschalter 59 auf. Dieser gibt nun ein erstes Fein-Diskriminationssignal Y an das Feinventil 3' ab, wobei sich dieses Fein-Diskriminationssignal Y jeweils dann ändert, d.h. das Feinventil 3' umsteuert, wenn die Regelabweichung den ersten oder den zweiten Schwellwert $+U_F$ oder $-U_F$ erreicht hat.

Wird nun ein neuer Sollwert vorgegeben, der gegenüber dem ersten Sollwert deutlich tiefer liegt, dann tritt ein dritter Schwellenwertschalter 60 in Funktion und bewirkt über ein drittes Grob-Diskriminationssignal X ein Öffnen des Grob-Ablaßventiles 17''' bzw. ein entsprechend schnelles Schließen der Auslauföffnung 39 mittels des Schiebers 40.

Aus Vorstehendem ergibt sich, daß die Schwellenwerte $U_E$ und $U_A$ der zweiten und dritten Schwellenwertschalter 58 und 60 einer relativ großen Regelabweichung im Summenpunkt 57 entsprechen. Die Spannungs-Schwellwerte $U_E$ und $U_A$, die jeweils einen Wechsel der Grob-Diskriminationssignale Z bzw. Y bewirken, sind in Figur 6 symbolisch in den zweiten bzw. dritten Schwellenwertschalter 58 bzw. 60 eingezeichnet. Mit anderen Worten wird dann, wenn die Regelabweichung einen oberhalb oder unterhalb der Spannungen $U_E$ bzw. $U_A$ liegenden Wert aufweist, das Grob-Abströmventil 17''' bzw. das Grob-Einlaßventil 14''' im Sinne einer Luftzufuhr bzw. Luftabfuhr angesteuert. Hat die Regelabweichung hingegen einen zwischen den Spannungswerten $U_E$ und $U_A$ liegenden Spannungswert, dann sind beide Grob-Ventile 14''' und 17''' geschlossen und es wird nur mit dem Feinventil 3' in der Weise geregelt, daß es mittels des Fein-Diskriminationssignals Y laufend umgesteuert wird und hierdurch Mikro-Druckschwankungen im Stellantrieb 5'' initiiert.

Das Regelverhalten in den Grob-Bereichen sowie im Fein-Bereich wird jeweils durch Abgleichung der Schwellenwerte bzw. der entsprechenden Schaltpunkte bestimmt.

Die Schaltpunkte bzw. die dritten und vierten Schwellwertspannungen $U_E$ und $U_A$ für die Regelabweichungen sind synchron durch ein Potentiometer 61 und die ersten und zweiten Schwellenwertspannungen $\pm U_F$ durch ein Potentiometer 62 vorwählbar.

Arbeitet nun die Regelanordnung im Fein-Bereich, liegt also die Regelabweichung zwischen $U_E$ und $U_A$, wird ein Betriebssignal gebildet. Hierzu ist ein UND-Glied vorgesehen, das die Signale auf Leitungen 63 und 64 verknüpft. Dieses Betriebssignal kann mittels des Bedienungsgerätes 11'', des Computers 30 oder einer Lampe 65 sichtbar gemacht werden.

Ferner wird gemäß Figur 6 mittels eines Spannungs-Frequenzwandlers 66 der Spannungswert des Istwert-Signals in einen entsprechenden Frequenzwert überführt. Dieses Frequenzsignal kann über eine Leitung 67 zur Anzeige der Mengenimpulse bzw. Ermittlung der entsprechenden Produktleistung während einer gewünschten Zeit verwertet werden.

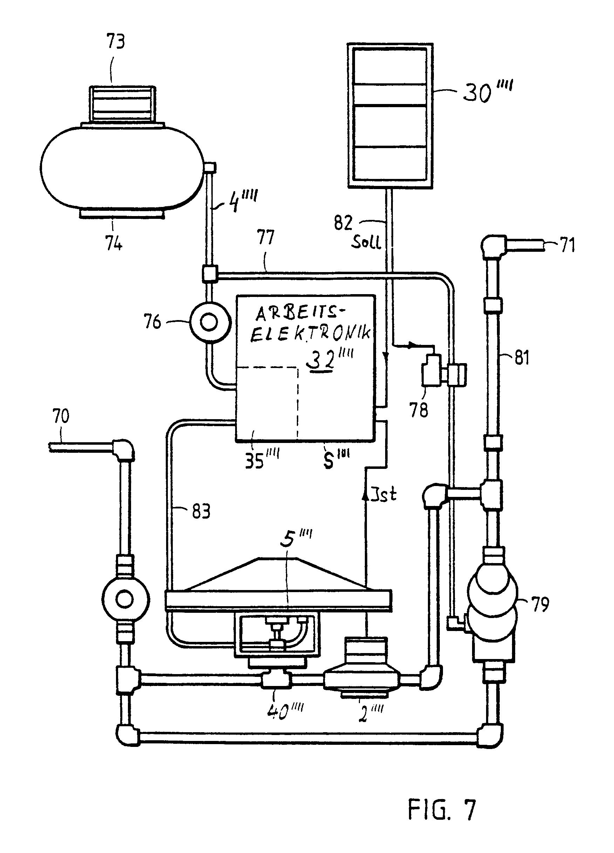

In Figur 7 ist ein weiteres Ausführungsbeispiel der Erfindung zur Regelung der Dosierung einer Wassermenge dargestellt. Beim dargestellten Ausführungsbeispiel wird Wasser über eine Leitung 70 dem Wasserleitungsnetz entnommen und über eine Leitung 71 einem Endverbraucher zugeführt. Zur Vermeidung von Wiederholungen wird hinsichtlich der Einzelheiten der Regelung auf die vorangegangenen Ausführungsbeispiele Bezug genommen.

Mit einem Steuergerät oder Computer 30'''' wird die Regelanordnung eingeschaltet. Hierdurch wird gleichzeitig ein Kompressor 73 eingeschaltet, der Druckluft in einen Speicher 74 gibt. Der Speicher 74 ist über eine Speiseleitung 4'''' mit einem elektro-pneumatischen Wandler 35'''' verbunden. Letzterer steuert über eine Leitung 83 einen Stellantrieb 5''''.

Im einzelnen ist zwischen den Speicher 74 und ein Steuergerät S'''' noch ein Luftfilter 76 geschaltet. Im Steuergerät S'''' befindet sich sowohl die Regler/Komparator-Einheit 1'' als auch der bereits genannte elektro-pneumatische Wandler 35''''. Der elektro-pneumatische Wandler 35'''' enthält wiederum die elektro-pneumatischen Ventile 3', 14' und 17'.

Das in Figur 7 dargestellte Ausführungsbeispiel weist auch eine Einrichtung zur Abkoppelung des Regelkreises von der Wasserversorgungs-Steuerung auf, beispielsweise im Falle eines Fehlers im Regelkreis oder notwendiger Servicearbeiten. Für den dann möglichen Handbetrieb ist ein zusätzliches elektro-pneumatisches Ventil 78 vorgesehen, welches die Luftströmung in einer Leitung 77 steuert. Durch entsprechende Ansteuerung des elektro-pneumatischen Ventils 78 läßt sich ein Wasserschieber 79 öffnen. Beim Handbetrieb läßt sich die Wassermenge an einem Wasserrohr 81 ablesen.

Im normalen Regelbetrieb ist das elektro-pneumatische Ventil 78 so gesteuert, daß der Wasserschieber 79 geschlossen ist. Die strömende Wassermenge wird in diesem Fall von einem als Durchlauf-Wasserzähler ausgebildeten Istwert-Fühler 2'''' abgelesen. Der für den Wasserdurchlauf gewünschte Sollwert wird im Regelbetrieb über eine Leitung 82 dem Steuergerät S'''' bzw. der Regler/Komparator-Einheit 1'' vorgegeben. Die Regler/Komparator-Einheit 1'' steuert nun die elektro-pneumatische Wandlereinheit 35''''. Diese steuert über eine Leitung 83 die pneumatische Betätigung des als Membranantrieb ausgebildeten Stellantriebes 5''''. Die Membrane des Stellantriebes 5'''' hat einen verhältnismäßig großen Durchmesser, beispielsweise einen Durchmesser von 10 bis 14 cm, so daß eine sehr große Kraft für die Verschiebung des Stellorganes 40'', hier eines Einstellhahnes, zur Verfügung steht. Unmittelbar nach dem Einstellhahn 40'', der funktionell dem Schieber 40 in Figur 5 entspricht, ist der Durchlauf-Wasserzähler 80 angeordnet. Der Durchlauf-Wasserzähler 80 gibt über eine entsprechende Elektronik ein dem (momentanen) Istwert entsprechendes Signal ab. Der Istwert wird, wie schon erläutert, in der Regler/Komparator-Einheit 1'' mit dem Sollwert verglichen. Aus der daraus resultierenden Regelabweichung werden dann die Diskriminations- bzw. Stellsignale in der beschriebenen Weise abgeleitet. Im übrigen kann der Istwert gleichzeigt als Betriebswert zur Feststellung einer bestimmten Wassermenge während einer Zeiteinheit im Computer ausgewertet werden.

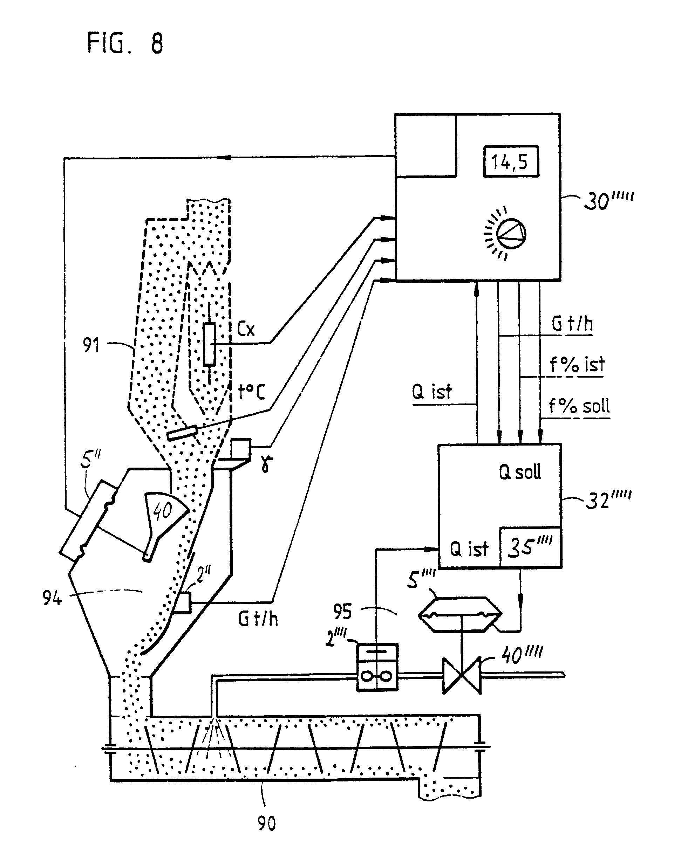

Eine Verknüpfung der in den Figuren 5 und 7 dargestellten Ausführungsbeispiele zu einer Getreide-Netzanlage, d.h. eine Anlage zum Befeuchten von Getreide, ist in Figur 8 dargestellt. Hierbei kann vollinhaltlich auf die anhand der Figuren 5 und 7 gemachten Erläuterungen zurückgegriffen werden. Die Dosierung von Wasser zu einem kontinuierlich fließenden Getreidestrom kann nur dann genau und ohne Schwankungen erfolgen, wenn beide Systeme, also das System zur Dosierung des Getreides und das System zur Dosierung von Wasser entsprechend genau und frei von Aufschaukelungen arbeiten. Mit der in Fig. 8 schematisch dargestellten Verknüpfung der beiden Systeme konnte erstmalig eine Aufgabe restlos gelöst werden, die im Rahmen der Getreidemüllerei seit langem ungelöst war. Hier zeigt sich in sehr überzeugender Weise die Eleganz der neuen Lösung beim Zusammenwirken zweier erfindungsgemäß aufgebauter Regelanordnungen.

Die präzise kontinuierliche Dosierung einer Flüssigkeit zu einem kontinuierlich präzise dosierbaren Getreidefluß erlaubt nun auch die Verwendung eines sehr schnell arbeitenden, sogenannten Durchlauf-Intensivnetzgerätes 90.

Diese besonders vorteilhafte Lösung beinhaltet die kontinuierliche Durchlaufmessung und Regelung von Getreide sowie die kontinuierliche Durchlaufmessung und Regelung einer Flüssigkeitsdosierung zum Getreide. Die intensive und sofortige Mischung dieser beiden Komponenten, nämlich Getreide und Flüssigkeit, erfolgt dann im Intensivnetzgerät 90. Die Koordination der beiden Regeleinrichtungen geschieht in einem Computer 30'''''.

Die Ausgangsfeuchtigkeit des Getreides kann dabei in einer Feuchtigkeitsmeßstrecke 91 (strichliert gezeichnet) gemessen werden. Der Computer 30''''' ermittelt aus der Temperatur t einen zum Schüttgewicht proportionalen Faktor $\gamma$ und aus einem elektrischen Kapazitätswert $C_x$ die relative Feuchtigkeit des Getreides und vergleicht sie mit der eingegebenen Sollfeuchte. Aufgrund dieser Daten und des vom Istwertfühler 2'' gemessenen Durchlaufmengensignals Gt/h wird im Computer 30''''' ein Sollwert Q für die zuzugebende Wassermenge errechnet und der Arbeitselektronik 32'''' vorgegeben. Ein Flüssigkeits-Durchlauf-Istwertfühler 2'''' ermittelt den Istwert der zugeführten Wassermenge. In der Arbeitselektronik 32'''' werden dann die Soll- und die Ist-Werte miteinander verglichen. Aus der sich ergebenden Regelabweichung wird dann das Stellsignal dem Stellantrieb S'''' zugeführt, der seinerseits ein als Wasserzuführventil (z. B. Schieber) ausgebildetes Stellorgan 40'''' steuert.

In einer weiteren Variante kann anstelle der Meßstrecke 91 direkt ein Silo oder eine Abstelzelle verwendet werden. In diesem Fall wird die gewünschte prozentuale Feuchtigkeitserhöhung vorgegeben.

**Patentansprüche**

1. Regelverfahren, insbesondere zur Regelung des Durchsatzes von schütfähigem oder flüssigem Gut in einer Getreidemühlenanlage, bei dem ein Sollwert für eine Regelgröße vorgegeben wird, der Istwert der Regelgröße gemessen wird, der Soll- mit dem Istwert zur Bestimmung der Regelabweichung verglichen wird, die Regelabweichungen in einen Feinbereich und einen oberen und unteren Grobbereich unterteilt werden, Mikrodruckschwankungen durch eine Fluidfeinströmung einem als fluidischen Druckantrieb ausgebildeten Stellantrieb (5; 5';

5''; 5''') aufgegeben werden, wenn die Regelabweichung innerhalb des Feinbereichs liegt, und bei dem zur Beseitigung von in den beiden Grobbereichen liegenden Regelabweichungen Fluid über Grobventile dem Druckantrieb zugeführt oder aus diesem abgeleitet wird, dadurch <u>gekennzeichnet</u>, daß die Mikrodruckschwankungen dadurch erzeugt werden, daß die effektive Fluidfeinströmung jedesmal dann umgekehrt wird, wenn die Regelabweichung innerhalb des Feinbereichs liegende Schwellwerte ($+U_F$, $-U_F$) erreicht.

2. Verfahren nach Anspruch 1, dadurch gekennzeichnet, daß

a) eine - im Vergleich zur gesamten Fluidmenge im Druckantrieb (5) geringe - erste Mikro-Fluidströmung in den Druckantrieb (5) dauernd eingeleitet und

b) die Richtung einer hierdurch im Druckantrieb (5) hervorgerufenen Mikro-Druckänderung im Bereich kleiner Regelabweichungen dadurch alternierend umgekehrt wird, daß

b. 1) zusätzlich eine zweite Mikro-Fluidströmung, die ebenfalls gering, jedoch größer als die erste Fluidströmung ist, jedesmal dann aus dem Druckantrieb (5) abgeführt wird, sobald die Regelabweichung einen ersten (oberen), innerhalb des (ersten) Bereiches kleiner Regelabweichungen liegenden Schwellwert ($+U_F$) erreicht hat und

b. 2) diese zusätzliche Fluidabfuhr jeweils solange aufrechterhalten wird, bis die Regelabweichung auf einen zweiten (unteren),ebenfalls innerhalb des ersten Bereiches kleiner Regelabweichungen liegenden Schwellwert ($-U_F$) abgesunken ist.

3. Verfahren nach Anspruch 1, dadurch gekennzeichnet, daß

a) eine - im Vergleich zur gesamten Fluidmenge im Druckantrieb (5) - geringe erste Mikro-Fluidströmung aus dem Druckantrieb (5) dauernd abgeführt wird und

b) die Richtung einer hierdurch im Druckantrieb (5) hervorgerufenen Mikro-Druckänderung im Bereich kleiner Regelabweichungen dadurch alternierend umgekehrt wird, daß

b. 1) zusätzlich eine zweite Mikro-Fluidströmung, die ebenfalls gering, jedoch größer als die erste Fluidströmung ist, jedesmal dann in den Druckantrieb eingeleitet wird, sobald die Regelabweichung einen zweiten (unteren), innerhalb des (ersten) Bereiches kleiner Regelabweichungen liegenden Schwellenwert ($-U_F$) erreicht hat und

b. 2) diese Fluidzufuhr solange jeweils aufrechterhalten wird, bis die Regelabweichung auf einen ersten (oberen),ebenfalls innerhalb des (ersten) Bereiches kleiner Regelabweichungen liegenden Schwellenwert ($+U_F$) angestiegen ist.

4. Verfahren nach Anspruch 1, dadurch gekennzeichnet, daß zur Beaufschlagung des Fluids im Druckantrieb (5') mit den Mikro-Druckschwankungen im (ersten) Bereich kleiner Regelabweichungen eine - im Vergleich zur gesamten Fluidmenge im Druckantrieb (5') - geringe Mikro-Fluidströmung in den Druckantrieb (5') eingeleitet oder aus diesem abgeführt und hierbei die Richtung dieser Mikro-Fluidströmung jeweils dann umgekehrt wird, wenn die Regelabweichung den ersten (oberen) oder den zweiten (unteren) Schwellwert ($+U_F$, $-U_F$) innerhalb des (ersten) Bereiches kleiner Regelabweichungen erreicht hat.

5. Verfahren nach wenigstens einem der vorstehenden Ansprüche, dadurch gekennzeichnet, daß die vom Meßausgang des Istwertfühlers (2; 2'; 2''; 2'''') bis zum Ausgang der Komparator/Regler-Einheit (1; 1'; 1'') vorgenommene Signalgewinnung und -verarbeitung elektrisch/elektronisch durchgeführt wird.

6. Verfahren nach wenigstens einem der vorstehenden Ansprüche, dadurch gekennzeichnet, daß für die Mikro-Druckschwankungen eine mittlere Schwankungshäufigkeit von etwa 1 bis 50 Schwankungen pro Sekunde gewählt wird.

7. Verfahren nach Anspruch 6, dadurch gekennzeichnet, daß für die Mikro-Druckschwankungen eine mittlere Schwankungshäufigkeit von etwa 5 bis 20 Schwankungen pro Sekunde gewählt wird.

8. Verfahren nach einem der Ansprüche 1 bis 7, dadurch gekennzeichnet, daß die Fluidzufuhr über die Grobventile proportional zum Wert der Regelabweichung erfolgt.

9. Anwendung des Verfahrens nach wenigstens einem der vorstehenden Ansprüche zur kontinuierlichen Regelung der Dosierung eines fallenden Getreidestromes in einer Getreidemühlenanlage.

10. Anwendung des Verfahrens nach wenigstens einem der vorstehenden Ansprüche zur kontinuierlichen Regelung der Dosierung der Wasserzufuhr zu Getreide in einer Getreidemühlenanlage.

11. Anordnung zur Regelung einer Regelgröße, insbesondere zur Durchführung des Verfahrens nach wenigstens einem der vorstehenden Ansprüche, mit

a) einen Sollwertgeber (11; 11''; 30; 30''''; 30'''''), einem Istwertfühler (2; 2'; 2''; 2''''), einer einen Diskriminator (10'; 10'') aufweisenden Komparator/Regler-Einheit (1; 1'; 1'') und einem den vorstehenden Elementen nachgeschalteten Stellglied (Stellantrieb und Stellorgan),

b) dessen Stellantrieb als fluidischer Druckantrieb (5; 5'; 5''; 5'''') ausgelegt ist, dadurch gekennzeichnet, daß

c) der Diskriminator (10; 10'') ausgelegt ist zur Abgabe eines ersten Diskriminationssignals (Y), wenn die vom Komparatorabschnitt der Komparator/Regler-Einheit (1; 1'; 1'') gemessenen Regelabweichungen zwischen zwei (einem ersten und einem zweiten) Schwellwerten ($+U_F$, $-U_F$) innerhalb eines vorgegebenen, um Null gelegenen ersten Wertebereiches (Bereich kleiner Regelabweichungen) liegen und

d) ein Steuereingang des fluidischen Druckantriebes (5; 5'; 5''; 5'''')

d. 1) mit dem zur Abgabe des ersten Diskriminationssignals (Y) vorgesehenen Diskriminatorausgang verbunden ist und

d. 2) zur Beaufschlagung des Druckantriebes (5; 5'; 5''; 5'''') mit Mikro-Druckschwankungen (rasche Druckschwankungen mit geringen Spitzenwerten) bei Ansteuerung durch das erste Diskriminationssignal (Y) ausgelegt ist.

12. Regelanordnung nach Anspruch 11, dadurch gekennzeichnet, daß der Sollwertgeber (11; 11''; 30; 30'''; 30'''''), der Istwertfühler (2; 2'; 2''; 2''''') und die Komparator/Regler-Einheit (1; 1'; 1''), einschließlich des Diskriminators (10; 10''), als elektrische/elektronische Signal-Gewinnungs/Verarbeitungs-Elemente ausgelegt sind.

13. Regelanordnung nach Anspruch 12, dadurch gekennzeichnet, daß der zur Beaufschlagung des Druckantriebs (5; 5'; 5''; 5'''') mit den Mikro-Druckschwankungen ausgelegte Steuereingang eine elektrisch ansteuerbare Einrichtung für eine Fluidzufuhr oder -abfuhr in den oder aus dem Druckantrieb (5; 5', 5''; 5'''') aufweist und der effektive Strömungsquerschnitt der Fluidzufuhr/-abfuhr-Einrichtung so klein ist, daß der von ihm durchgelassene Fluidstrom den Druck im Druckantrieb (5; 5'; 5''; 5'''') nur geringfügig ändert.

14. Regelanordnung nach Anspruch 13, dadurch gekennzeichnet, daß die zur Einleitung der Mikro-Druckschwankungen vorgesehene Einrichtung zur Fluidzufuhr/ -abfuhr in den/aus dem Druckantrieb (5; 5'; 5''; 5'''') ein elektropneumatisches Regelventil (3; 3') aufweist.

15. Regelanordnung nach Anspruch 14, dadurch gekennzeichnet, daß das elektropneumatische Regelventil (3') ein Drei-Weg-Ventil, insbesondere Drei-Weg-Membranventil ist.

16. Regelanordnung nach Anspruch 15 zur Durchführung des Verfahrens (Anwendung) nach Anspruch 9 oder 10, dadurch gekennzeichnet, daß der effektive Strömungsquerschnitt des Drei-Weg-Ventils kleiner oder gleich $\pi/4$ ist.

17. Regelanordnung nach wenigstens einem der Ansprüche 13 bis 15, insbesondere zur Durchführung des Verfahrens nach einem der Ansprüche 2 oder 3, dadurch gekennzeichnet, daß die beiden effektiven Strömungsquerschnitte in der Fluidzufuhr/-abfuhr-Einrichtung unterschiedlich groß sind.

18. Regelanordnung nach Anspruch 17, dadurch gekennzeichnet, daß die Fluidzufuhr/-abfuhr-Einrichtung so geschaltet ist, daß

a) der kleinere Strömungsquerschnitt dauernd und

b) der größere Strömungsquerschnitt dagegen nur bei An-Steuerung durch einen ersten Schwellenschalter (59) des Diskriminators (10''') offen ist, wobei

c) der erste Schwellenschalter (59) so geschaltet ist, daß er ein Steuersignal dann abgibt, wenn die Regelabweichung einen ersten - oder stattdessen einen zweiten - Schwellwert ($+U_F$, $-U_F$) innerhalb des (ersten) Bereiches kleiner Regelabweichungen erreicht hat.

19. Regelanordnung nach den Ansprüchen 14 und 18, dadurch gekennzeichnet, daß

a) die Fluidzufuhr/-abfuhr-Einrichtung zusätzlich noch eine Drossel (6) aufweist,

b) die Drossel (6) den kleineren effektiven Strömungsquerschnitt hat und

c) das elektro-pneumatische Regelventil (3) ein Zwei-Weg-Ventil ist.

20. Regelanordnung nach wenigstens einem der Ansprüche 11 bis 19, insbesondere zur Durchführung des Verfahrens nach Anspruch 8, dadurch gekennzeichnet, daß

a) der Diskriminator (10''') ein Fensterdiskriminator ist und zusätzlich zur Abgabe eines zweiten und dritten (Grob-)Diskriminationssignals (X, Z) für den Fall, daß die Regelabweichungen außerhalb (unterhalb eines dritten Schwellwertes ($U_E$) oder oberhalb eines vierten Schwellwertes ($U_A$)) des (ersten) Bereiches kleiner Regelabweichungen liegen, ausgelegt ist,

b) zusätzlich je ein elektrisch ansteuerbares fluidisches Grob-Einlaßventil (14''') und Grob-Ablaßventil (17'') zum Einlaß bzw. Ablaß von Fluid in den bzw. aus dem Druckantrieb (5') vorgesehen sind, wobei jeweils ein Steuereingang jedes Grob-Ventils (14'''; 17''') jeweils einem der Grob-Diskriminationssignal-Ausgänge zugeordnet ist,

c) die Grob-Ventile (14'''; 17''') für eine der Regelabweichung proportionale Fluidzufuhr/-abfuhr ausgelegt sind und

d) die für die Mikro-Druckschwankungen vorgesehene Fluidzufuhr/-abfuhr-Einrichtung als eine zwischen zwei Strömungszuständen umschaltbare Einrichtung ausgelegt ist.

21. Regelanordnung nach Anspruch 20, dadurch gekennzeichnet, daß die für die Mikro-Druckschwankungen vorgesehene Fluidzufuhr/-abfuhr-Einrichtung und das Grob-Einlaßventil (14) fluidisch parallel geschaltet sind.

22. Regelanordnung nach Anspruch 20 oder 21, dadurch gekennzeichnet, daß zwischen den Druckantrieb (5') einerseits und die für die Mikro-Druckschwankungen vorgesehene Fluidzufuhr/-abfuhr-Einrichtung, nebst Grobventilen (14, 17) andererseits eine einstellbare Grob-Drossel (21) geschaltet ist.

23. Regelanordnung nach wenigstens einem der Ansprüche 20 bis 22, dadurch gekennzeichnet, daß eine einstellbare Fein-Drossel (20) in Serie mit der für die Mikro-Druckschwankungen vorgesehenen Fluidzufuhr/-abfuhr-Einrichtung geschaltet ist.

**Claims**

1. Regulating method, in particular for regulating the throughput of pourable or liquid material in a corn milling plant, in which method a set value is given for a regulating variable, the actual value of the regulating variable is measured, the set value is compared with the actual value to determine the regulating deviation, the regulating deviations are divided into a fine range and an upper and lower coarse range, and micro-pressure-fluctuations are supplied by way of a fine fluid flow to an actuating drive (5; 5'; 5''; 5''') constructed as a fluid pressure drive, if the regulating deviation lies within the fine range, and in which method, to eliminate regulating deviations lying in the two coarse ranges, fluid is supplied via coarse valves to the pressure drive or drained off from it, characterised in that the micro-pressure-fluctuations are produced in such a way that the effective fine fluid flow is inverted each time the regulating deviation reaches threshold values ($+U_F$, $-U_F$) lying within the fine range.

2. Method according to claim 1, characterised in that,

a) a first micro-fluid-flow, small by comparison with the total fluid quantity in the pressure drive (5), is continuously directed into the pressure drive (5) and

b) the direction of a micro-pressure-change thereby caused in the pressure drive (5), in the range of small regulating deviations, is alternatingly inverted so that

b. 1) in addition a second micro-fluid-flow, which is likewise small, yet greater than the first fluid-flow, is then transferred each time from the pressure drive (5), as soon as the regulating deviation has reached a first (upper) threshold value ($+U_F$), lying within the (first) range of small regulating deviations and

b. 2) this additional fluid removal is maintained in each case until the regulating deviation has fallen to a second (lower) threshold value ($-U_F$), likewise lying within the first range of small regulating deviations.

3. Method according to claim 1, characterised in that

a) a slight first micro-fluid-flow, small by comparison with the total fluid quantity in the pressure drive (5), is continuously carried away out of the pressure drive (5) and

b) the direction of a micro-pressure-change thereby caused in the pressure drive (5), in the range of small regulating deviations, is alternatingly inverted so that

b. 1) in addition a second micro-fluid-flow, which is likewise slight, yet greater than the first fluid-flow, is then directed each time into the pressure drive, as soon as the regulating deviation has reached a second (lower) threshold value ($-U_F$), lying within the (first) range of small regulating deviations and

b. 2) this fluid supply is maintained in each case until the regulating deviation has risen to a first (upper) threshold value ($+U_F$), likewise lying within the (first) range of small regulating deviations.

4. Method according to claim 1, characterised in that for the admission of the fluid in the pressure drive (5') with the micro-pressure-fluctuations in the (first) range of small regulating deviations a microfluid-flow, small by comparison with the total fluid quantity in the pressure drive (5'), is directed into the pressure drive (5') or carried away from it and herewith the direction of this micro-fluid-flow is inverted in each case when the regulating deviation has reached the first (upper) or the second (lower) threshold value ($+U_F$, $-U_F$) within the (first) range of small regulating deviations.

5. Method according to at least one of the preceding claims, characterised in that the signal production and processing undertaken from the measuring output of the actual value sensor (2; 2'; 2''; 2'''') up to the output of the comparator control unit (1; 1'; 1'') is carried out electrically/electronically.

6. Method according to at least one of the preceding claims, characterised in that for the micropressure-fluctuations an average fluctuation frequency of about 1 to 50 fluctuations per second is selected.

7. Method according to claim 6, characterised in that for the micro-pressure-fluctuations an average fluctuation frequency of about 5 to 20 fluctuations per second is selected.

8. Method according to one of claims 1 to 7, characterised in that the fluid supply ensues via the coarse valves in proportion to the value of the regulating deviation.

9. Application of the method according to at least one of the above claims for the continuous regulation of the dosing of a falling corn stream in a corn milling plant.

10. Application of the method according to at least one of the above claims for the continuous regulation of the dosing of the water supply to corn in a corn milling plant.

11. Arrangement for regulating a regulating variable, in particular for carrying out the method according to at least one of the above claims, with

a) means for outputting a desired value (11; 11''; 30; 30''''; 30'''''), an actual value sensor (2; 2'; 2''; 2''''), a comparator/control unit (1; 1'; 1'') having a discriminator (10; 10'') and an actuator (actuating drive and actuating unit) connected downstream of the above elements,

b) the actuating drive of which is arranged as a fluid pressure drive (5; 5'; 5''; 5''''),
    characterised in that

c) the discriminator (10; 10'') is arranged to deliver a first discrimination signal (Y), when the regulating deviations measured by the comparator part of the comparator/control unit (1; 1'; 1'') lie between two (a first and a second) threshold values ($+U_F$, $-U_F$) within a given first value range lying about zero (range of small regulating deviations) and

d) a control input of the fluid pressure drive (5; 5'; 5''; 5'''')

d. 1) is connected to the discriminator output provided for the delivery of the first discrimination signal (Y) and

d. 2) is arranged to receive the pressure drive (5; 5'; 5''; 5'''') with micro-pressure-fluctuations (quick pressure fluctuations with slight peak values) when triggered through the first discrimination signal (Y).

12. Regulating arrangement according to claim 11, characterised in that the desired value output means (11; 11''; 30; 30''''; 30''''''), the actual value sensor (2; 2'; 2''; 2'''') and the comparator/control unit (1; 1'; 1''), including the discriminator (10; 10''), are arranged as electric/electronic signal production/processing elements.

13. Regulating arrangement according to claim 12, characterised in that the control input arranged to receive the pressure drive (5; 5'; 5''; 5'''') with the micro-pressure-fluctuations has a device, which can be triggered electrically, for a fluid flow into or out of the pressure drive (5; 5', 5''; 5'''') and the effective flow cross-section of the fluid supply/removal device is so small that the fluid stream permitted to pass therethrough changes the pressure in the pressure drive (5; 5'; 5''; 5'''') only slightly.

14. Regulating arrangement according to claim 13, characterised in that the device provided for the introduction of the micro-pressure-fluctuations has for fluid supply/removal into/out of the pressure drive (5; 5'; 5''; 5'''') an electro-pneumatic control valve (3; 3').

15. Regulating arrangement according to claim 14, characterised in that the electro-pneumatic control valve (3') is a three-way valve, in particular a threeway diaphragm valve.

16. Regulating arrangement according to claim 15 for carrying out the method (application) according to claim 9 or 10, characterised in that the effective flow cross-section of the three-way valve is smaller than or equal to $\pi/4$.

17. Regulating arrangement according to at least one of claims 13 to 15, in particular for carrying out the method according to one of claims 2 or 3, characterised in that both effective flow cross-sections in the fluid supply/removal device are of different sizes.

18. Regulating arrangement according to claim 17, characterised in that the fluid supply/removal device is connected so that
a) the smaller flow cross-section is continuously open and
b) the larger flow cross-section by contrast is only open when triggered through a first threshold switch (59) of the discriminator (10'''), in which case
c) the first threshold switch (59) is connected so that it delivers a control signal when the regulating deviation has reached a first - or instead of that a second - threshold value (+$U_F$, -$U_F$) within the (first) range of small regulating deviations.

19. Regulating arrangement according to claims 14 and 18, characterised in that
a) the fluid supply/removal device also comprises a choke (6),
b) the choke (6) has the smaller effective cross-section, and

c) the electro-pneumatic control valve (3) is a two-way valve.

20. Regulating arrangement according to at least one of claims 11 to 19, in particular for carrying out the method according to claim 8, characterised in that
a) the discriminator (10''') is a window discriminator and is arranged to deliver second and third (coarse) discrimination signals (X, Z), for the case that the regulating deviations lie outside (below a third threshold value ($U_E$) or above a fourth threshold value ($U_A$)) the (first) range of small regulating deviations,
b) in addition, respective electrically triggerable coarse fluid inlet valves (14''') and coarse outlet valves (17''') are provided for the inlet and outlet of fluid to and from the pressure drive (5'), the control inputs of the coarse valve (14'''; 17''') respectively being allocated to the coarse discrimination signal outputs,
c) the coarse valves (14'''; 17''') are arranged for a fluid supply/removal which is in proportion to the regulating deviation and
d) the fluid supply/removal device provided for the micro-pressure-fluctuations is arranged as a device which can be switched over between two flow states.

21. Regulating arrangement according to claim 20, characterised in that the fluid supply/removal device provided for the micro-pressure-fluctuations and the coarse inlet valve (14) are in parallel fluid connection.

22. Regulating arrangement according to claim 20 or 21, characterised in that between the pressure drive (5') on the one hand and the fluid supply/removal device provided for the micro-pressure-fluctuations together with coarse valves (14, 17), on the other hand, an adjustable coarse choke (21) is connected.

23. Regulating arrangement according to at least one of claims 20 to 22, characterised in that an adjustable fine choke (20) is connected in series with the fluid supply/removal device provided for the micro-pressure-fluctuations.

**Revendications**

1. Procédé de régulation, en particulier pour la régulation du débit de matière déversable ou liquide dans une installation de broyage de grain, dans lequel une valeur de consigne d'une grandeur variable est fixée, la valeur instantanée de la grandeur variable est mesurée, la valeur de consigne est comparée à la valeur instantanée pour la détermination de l'écart de régulation, les écarts de régulation sont divisés en un domaine fin, un domaine grossier supérieur et un domaine grossier inférieur, des microvariations de pression sont envoyées par un courant fin de fluide à un actionneur (5; 5'; 5'' 5'''), qui est un actionneur fluidique à pression lorsque l'écart de régulation se situe dans le domaine fin, et dans lequel, pour l'élimination des écarts de régulation situés dans les deux domaines grossiers, du fluideest envoyé, par des vannes grossières à l'actionneur à pression ou évacué de celui-ci, caractérisé en ce que les microvariations de pression sont produites par inversion du courant fin effectif de fluide chaque fois que l'écart de régulation atteint des seuils ($+U_F$, $-U_F$) situés dans le domaine fin.

2. Procédé selon la revendication 1, caractérisé en ce que

a) un premier microcourant de fluide, petit comparativement à la quantité totale de fluide dans l'actionneur à pression (5), est envoyé en permanence dans l'actionneur à pression (5) et

b) le sens d'une microvariation de pression appliquée à l'actionneur à pression (5), dans le domaine des petits écarts de régulation, est inversé en alternance par le fait que

b. 1) en plus, un deuxième microcourant de fluide, également petit mais plus grand que le premier, est évacué de l'actionneur à pression (5) dès que l'écart de régulation a atteint un premier seuil (seuil supérieur) ($+U_F$) situé dans le domaine (premier domaine) des petits écarts de régulation et

b. 2) cette évacuation supplémentaire de fluide est chaque fois maintenue jusqu'à ce que l'écart de régulation soit descendu à un deuxième seuil (seuil inférieur) ($-U_F$) également situé dans le domaine (premier domaine) des petits écarts de régulation.

3. Procédé selon la revendication 1, caractérisé en ce que

a) un premier microcourant de fluide, petit comparativement à la quantité totale de fluide dans l'actionneur à pression (5), est évacué en permanence de l'actionneur à pression (5) et

b) le sens d'une microvariation de pression appliquée à l'actionneur à pression (5), dans le domaine des petits écarts de régulation, est inversé en alternance par le fait que

b. 1) en plus, un deuxième microcourant de fluide, également petit mais plus grand que le premier, est envoyé dans l'actionneur à pression dès que l'écart de régulation a atteint un deuxième seuil (seuil inférieur) ($-U_F$) situé dans le domaine (premier domaine) des petits écarts de régulation et

b. 2) cet envoi de fluide est chaque fois maintnenu jusqu'a ce que l'écart de régulation soit monté à un premier seuil (seuil supérieur) ($+U_F$) également situé dans le domaine (premier domaine) des petits écarts de régulation.

4. Procédé selon la revendication 1, caractérisé en ce que pour l'application au fluide dans l'actionneur à pression (5') des microvariations de pression dans le domaine (premier domaine) des petits écarts de régulation, un microcourant de fluide, petit comparativement à la quantité totale de fluide dans l'actionneur à pression (5') est envoyé dans l'actionneur à pression (5') ou évacué de celui-ci et le sens de ce microcourant de fluide est inversé chaque fois que l'écart de régulation a atteint le premier seuil (seuil supérieur) ou le deuxième seuil (seuil inférieur)

($+U_F$, $-U_F$) dans le domaine (premier domaine) des petits écarts de régulation.

5. Procédé selon au moins une des revendications précédentes, caractérisé en ce que l'acquisition et le traitement des signaux depuis la sortie de mesure du capteur de valeur instantanée (2; 2'; 2''; 2'''') jusqu'à la sortie du bloc comparateur-régulateur (1; 1'; 1'') sont faits par voie électrique-électronique.

6. Procédé selon au moins une des revendications précédentes, caractérisé en ce que, pour les microvariations de pression, on choisit une fréquence moyenne d'environ 1 à 50 variations par seconde.

7. Procédé selon la revendiaction 6, caractérisé en ce que, pour les microvariations de pression, on choisit une fréquence moyenne d'environ 5 à 20 variations par seconde.

8. Procédé selon l'une des revendications 1 à 7, caractérisé en ce que l'apport de fluide par les vannes grossières est fait proportionnellement à la valeur de l'écart de régulation.

9. Application du procédé selon au moins une des revendications précédentes à la régulation continue du dosage d'un courant de grain tombant dans une installation de broyage de grain.

10. Application du procédé selon au moins une des revendications précédentes à la régulation continue du dosage de l'apport d'eau au grain dans une installation de broyage de grain.

11. Dispositif de régulation d'une grandeur variable, en particulier pour la mise en oeuvre du procédé selon au moins une des revendications précédentes, comportant

a) un émetteur de valeur de consigne (11; 11''; 30; 30''''; 30''''') , un capteur de valeur instantanée (2; 2'; 2''; 2''''), un bloc comparateur-régulateur (1; 1'; 1'') comportant un discriminateur (10'; 10''), et un élément de réglage final (actionneur et organe de réglage)

b) dont l'actionneur est un actionneur fluidique à pression (5; 5'; 5''; 5''''), caractérisé en ce que

c) le discriminateur (10; 10'') est conçu pour émettre un premier signal de discrimination (Y) lorsque les écarts dé régulation mesurés par la partie comparateur du bloc comparateur-régulateur (1; 1'; 1'') se situent entre deux seuils (un premier et un second) ($+U_F$, $-U_F$) dans un premier domaine fixé situé autour de zéro (domaine des petits écarts de régulation) et

d) une entrée de commande de l'actionneur fluidique à pression (5; 5'; 5''; 5''''')

d. 1) est relié à la sortie du discriminateur prévue pour l'émission du premier signal de discrimination (Y) et

d. 2) est conçue pour l'application à l'actionneur à pression (5; 5'; 5''; 5''''') de microvariations de pression (variations rapides de pression avec faibles valeurs de pointe) lorsqu'elle est attaquée par le premier signal de discrimination (Y).

12. Dispositif de régulation selon la revendication 11, caractérisé en ce que l'émetteur de valeur de consigne (11; 11''; 30; 30''''; 30'''''), le capteur de valeur instantanée (2; 2'; 2''; 2'''') et le bloc comparateur-régulateur (1; 1'; 1''), y compris le discriminateur (10; 10''), sont des éléments électriques-électroniques d'acquisition et de traitements de signaux.

13. Dispositif de régulation selon la revendication 12, caractérisé en ce que l'entrée de commande destinée à l'application des microvariations de pression à l'actionneur à pression (5; 5'; 5''; 5'''') comporte un dispositif à commande électrique pour un apport de fluide à l'actionneur à pression, ou une évacuation de fluide de celui-ci, et en ce que la section effective de passage de ce dispositif d'apport et d'évacuation de fluide est si petite que le courant de fluide qu'elle laisse passer modifie de façon insignifiante la pression dans l'actionneur à pression (5; 5'; 5''; 5'''').

14. Dispositif de régulation selon la revendication 13, caractérisé en ce que le dispositif d'apport de fluide à l'actionneur à pression (5; 5'; 5''; 5'''') et d'évacuation de fluide de celui-ci prévu pour l'envoi des microvariations de pression comporte une vanne électro-pneumatique de réglage (3; 3').

15. Dispositif de régulation selon la revendication 14, caractérisé en ce que la vanne électro-pneumatique de réglage (3') est une vanne à trois voies, notamment à membrane.

16. Dispositif de régulation selon la revendication 15 pour la mise en oeuvre du procédé (application) selon l'une des revendications 9 et 10, caractérisé en ce que la dimension effective du passage de la vanne à trois voies est inférieure ou égale à $\pi/4$.

17. Dispositif de régulation selon au moins une des revendications 13 à 15, en particulier pour la mise en oeuvre du procédé selon l'une des revendications 2 et 3, caractérisé en ce que les deux sections effectives de passage du dispositif d'apport et d'évacuation du fluide sont différentes.

18. Dispositif de régulation selon la revendication 17, caractérisé en ce que le dispositif d'apport et d'évacuation de fluide est monté de façon que

a) la petite section de passage soit ouverte en permanence et

b) la grande section de passage soit ouverte seulement en cas d'attaque par un premier interrupteur à seuil (59) du discriminateur (10'''),

c) ce premier interrupteur à seuil (59) étant monté de façon à émettre un signal de commande lorsque l'écart de régulation a atteint un premier seuil ou bien un deuxième seuil ($+U_F$, $-U_F$) dans le domaine (premier domaine) des petits écarts de régulation.

19. Dispositif de régulation selon les revendications 14 et 18, caractérisé en ce que

a) le dispositif d'apport et d'évacuation de fluide présente en plus une restriction ou étranglement (6),

b) cette restriction (6) a la petite section de passage et

c) la vanne électro-pneumatique de réglage (3) est une vanne à deux voies.

20. Dispositif de régulation selon au moins une des revendications 11 à 19, en particulier pour la mise en oeuvre du procédé de la revendication 8, caractérisé en ce que

a) le discriminateur (10''') est un discriminateur à fenêtre et est en plus conçu pour émettre un deuxième et un troisième signaux de discrimination (grossiers) (X, Z) dans le cas ou les écarts de régulation se situent en dehors (au-dessous d'un troisième seuil ($U_E$) ou au-dessus d'un quatrième seuil ($U_A$)) du domaine (premier domaine) des petits écarts de régulation,

b) il est en plus prévu une vanne fluidique grossière d'admission (14''') et une vane fluidique grossière d'évacuation (17''') à commande électrique pour l'admission de fluide dans l'actionneur à pression (5') et l'évacuation de fluide de celui-ci, une entrée de commande de chaque vanne grossière (14'''; 17''') étant affectée à une des sorties de signal grossier de discrimination,

c) les vannes grossières (14'''; 17''') sont conçues pour un apport et une évacuation de fluide proportionnels à l'écart de régulation et

d) le dispositif d'apport et d'évacuation de fluide prévu pour les microvariations de pression est un dispositif commutable entre deux états d'écoulement.

21. Dispositif de régulation selon la revendication 20, caractérisé en ce que le dispositif d'apport et d'évacuation de fluide prévu pour les microvariations de pression et la vanne grossière d'admission (14) sont montés fluidiquement en parallèle.

22. Dispositif de régulation selon l'une des revendications 20 et 21, caractérisé en ce qu'entre l'actionneur à pression (5'), d'une part, et le dispositif d'apport et d'évacuation de fluide prévu pour les microvariations de pression, avec les vannes grossières (14, 17), d'autre part, est montée une restriction ou étranglement grossier réglable (21).

23. Dispositif de régulation selon au moins une des revendications 20 à 22, caractérisé en ce qu'une restriction fine réglable (20) est montée en série avec le dispositif d'apport et d'évacuation de fluide prévu pour les microvariations de pression.

FIG. 1

FIG. 3

FIG. 3 A

FIG. 3 B

FIG. 2

FIG. 4

FIG. 5

7

FIG. 6

FIG. 7

FIG. 8